# EUROPEAN PATENT APPLICATION

(11) **EP 4 507 262 A1**
(43) Date of publication of application: **12.02.2025**
(21) Application number: 23794960.7
(22) Date of filing: 03.04.2023
(51) Int. Cl.: H04L 41/5051

(54) **COMMUNICATION METHOD AND DEVICE**

(30) Priority: 27.04.2022 CN 202210459586
(71) Applicant: Huawei Technologies Co., Ltd., Shenzhen, Guangdong 518129 (CN)
(72) Inventor: LIU, Liangliang, Shenzhen, Guangdong 518129 (CN); HUANG, Kai, Shenzhen, Guangdong 518129 (CN)
(74) Representative: Gill Jennings & Every LLP
(86) International application number: PCT/CN2023/086018
(87) International publication number: WO 2023/207525

(57) **Abstract**

A communication method and apparatus are provided. The method includes: A first control plane network element receives call signaling related to a call service, sends network element requirement information and preferred network element information to a network function repository network element based on the call signaling, and receives information about a target media plane network element from the network function repository network element. The call signaling includes information about a first media plane network element, and the first media plane network element is configured to provide a first media plane service associated with the call service. The network element requirement information indicates the network function repository network element to provide information about a media plane network element that can provide a second media plane service associated with the call service. The preferred network element information indicates that the first media plane network element is a preferred media plane network element. The target media plane network element is configured to provide a second media plane service. According to the solutions of this application, it can be ensured that the target media plane network element selected by the network function repository network element can provide the second media plane service, so that failures of the second media plane service are reduced.

## Description

### CROSS-REFERENCE TO RELATED APPLICATIONS

This application claims priority to Chinese Patent Application No. 202210459586.2, filed with the China National Intellectual Property Administration on April 27, 2022, and entitled "COMMUNICATION METHOD AND APPARATUS", which is incorporated herein by reference in its entirety.

### TECHNICAL FIELD

Embodiments of this application relate to the field of internet protocol (internet protocol, IP) multimedia subsystem (IP multimedia subsystem, IMS) communication technologies, and in particular, to a communication method and apparatus.

### BACKGROUND

An IMS network is a communication network for providing a multimedia service in an IP network. A media plane network element in the network may provide a plurality of media plane services associated with a call service, for example, an access service, an interworking service, and a resource service (for example, a voice conference) for a control plane network element, so that a network side provides rich media stream transmission services for a terminal device in the call service. Currently, all these media plane services are provided by the media plane network element initially selected by the control plane network element. However, with development of technologies, the media plane network element initially selected by the control plane network element may fail to provide all the media plane services. Consequently, the network side fails to provide the media stream transmission service for the terminal device in the call service.

### SUMMARY

Embodiments of this application provide a communication method and apparatus, to increase a success rate of a resource service.

According to a first aspect, a communication method is provided. The method may be performed by a first communication apparatus. The first communication apparatus may be a communication device or a communication apparatus, for example, a chip system, that can support the communication device in implementing a function required in the method. For example, the first communication apparatus is a control plane network element, a chip disposed in the control plane network element, or another component configured to implement a function of the control plane network element. An example in which the communication device is a first control plane network element is used below for description. The method includes:

The first control plane network element receives call signaling related to a call service, sends network element requirement information to a network function repository network element, and receives information about a target media plane network element from the network function repository network element. The call signaling includes information about a first media plane network element, and the first media plane network element can provide a first media plane service for the call service. The network element requirement information indicates the network function repository network element to provide information about a media plane network element that can provide a second media plane service associated with the call service. The target media plane network element is configured to provide the second media plane service, and the target media plane network element is the first media plane network element or a second media plane network element. In this solution, the first media plane network element is an initially selected media plane network element that can provide the first media plane service. When the first control plane network element requires a media plane service (for example, the second media plane service), the second media plane service may be provided for the network function repository network element. Therefore, the network function repository network element determines a media plane network element (which is, for example, referred to as the target media plane network element) that provides a media resource for the second media plane service. If the first media plane network element cannot provide a target media plane service, the network function repository network element may reselect a media plane network element for the second media plane service, so that failures of the second media plane service can be reduced.

In a possible implementation, that the first control plane network element sends the network element requirement information to the network function repository network element includes: The first control plane network element sends the network element requirement information and preferred network element information to the network function repository network element. The preferred network element information indicates a preferred media plane network element in media plane network elements that can provide the second media plane service.

In a possible implementation, the preferred network element information includes the information about the first media plane network element, to indicate that the first media plane network element is the preferred media plane network element. To be specific, when the first control plane network element requires the second media plane service, the first media plane network element may alternatively be provided for the network function repository network element. If the first media plane network element can provide the target media plane service, the network function repository network element may use the first media plane network element as the target media plane network element, so that a latency of the second media plane service is reduced.

In a possible implementation, that the preferred network element information indicates that the first media plane network element is the preferred media plane network element includes: The preferred network element information indicates to use the first media plane network element as the target media plane network element when the network function repository network element determines that the first media plane network element can provide the second media plane service. This may also be understood as that, when both the first media plane network element and the target media plane network element can provide the second media plane service for the call service, the first media plane network element is preferentially used as the target media plane network element. To be specific, on a premise that the first media plane network element can support the second media plane service, the first media plane network element is preferentially selected to be continuously used. Because the first media plane network element has been selected to provide the first media plane service for the call service, the first control plane network element knows media endpoint information on the first media plane network element, and does not need to trigger a procedure of requesting to allocate a media endpoint, so that a latency of an entire process of the second media plane service can be reduced.

In a possible implementation, the first media plane service is an access service or an interworking service, and the second media plane service is a resource service. That the first media plane service is the access service or the interworking service may be understood as that a selected media plane network element is a media plane network element that provides the access service or the interworking service. The access service is mainly a service that helps user equipment implement network address translation (network address translation, NAT) traversal of a media stream. The interworking service mainly helps the user equipment in a local network implement network address conversion of the media stream, to exchange media streams with a peer network. Considering that the media plane network element that provides the access service or the interworking service may not be capable of providing the resource service, if a control plane network element requires the resource service, the control plane network element may request a network function repository network element to re-determine a media plane network element, to reduce failures of the resource service as much as possible.

In a possible implementation, that the first control plane network element sends the network element requirement information and the preferred network element information to the network function repository network element includes: The first control plane network element sends a service discovery request message to the network function repository network element, where the service discovery request message includes the network element requirement information and the preferred network element information.

In a possible implementation, the method further includes: The first control plane network element obtains target media endpoint information of the target media plane network element, where the target media endpoint information includes information about a target media endpoint that is of the target media plane network element and that is configured to provide the second media plane service. The first control plane network element sends the target media endpoint information to a second control plane network element, where the second control plane network element is a control plane network element that provides an access service or an interworking service for a calling terminal device or a called terminal device of the call service. It may be understood that the first control plane network element may obtain the media endpoint information of the target media plane network element, and provide the media endpoint information for the second control plane network element, so that the first media plane network element can establish a connection to the target media plane network element.

In a possible implementation, the target media endpoint information includes an IP address and a port number of the target media endpoint.

In a possible implementation, the target media plane network element and the first media plane network element are not a same network element. For example, the target media plane network element is the second media plane network element. The method further includes: That the first control plane network element obtains the target media endpoint information of the target media plane network element includes: The first control plane network element sends an endpoint allocation request to the target media plane network element, and receives an endpoint allocation response sent by the target media plane network element. The endpoint allocation request is for requesting the target media endpoint information of the target media plane network element. The endpoint allocation response includes the target media endpoint information of the target media plane network element. If the target media plane network element and the first media plane network element are not a same network element, the first control plane network element does not know the media endpoint information of the target media plane network element. Naturally, the target media plane service cannot be implemented. In this case, the first control plane network element may request, by using the endpoint allocation request, to obtain the target media endpoint information of the target media plane network element from the target media plane network element.

In a possible implementation, the target media plane network element and the first media plane network element are a same network element. For example, the target media plane network element is the first media plane network element. The method further includes: The first control plane network element may obtain the media endpoint information of the first media plane network element from the received call signaling, in other words, obtain the target media endpoint information of the target media plane network element. It may be understood that, if the second media plane network element and the first media plane network element are a same network element, the procedure of requesting to allocate the media endpoint does not need to be re-triggered, and a media endpoint allocated by the first media plane network element may be directly used to establish a connection to the target media plane network element. Therefore, the first control plane network element does not need to request the media endpoint information from the target media plane network element, but may obtain the media endpoint information of the first media plane network element from the received call signaling, and forward the media endpoint information to the second control plane network element. In this solution, the call signaling carries the information about the target media endpoint (namely, a media endpoint of the first control plane network element), to notify the first control plane network element of a media endpoint allocated by an accessed media plane network element, so that signaling does not need to be separately sent, and signaling exchange can be reduced.

In a possible implementation, the method further includes: The first control plane network element requests the target media plane network element to provide the second media plane service.

In a possible implementation, that the first control plane network element requests the target media plane network element to provide the second media plane service includes: The first control plane network element sends indication information to the target media plane network element, where the indication information indicates the target media plane network element to provide the second media plane service through the target media endpoint. For example, the indication information includes the target media endpoint information. After a connection is established for a communication channel of the second media plane service, the first control plane network element may trigger the target media plane network element to start to provide the second media plane service.

In a possible implementation, the first control plane network element is an application server that provides an application service for a local end, or a serving-call control network element.

In a possible implementation, the second control plane network element is an interrogating-call session control network element or a proxy-call session control network element that provides an access service for a local end or a peer end.

According to a second aspect, an embodiment of this application provides a communication method. The method may be performed by a second communication apparatus. The second communication apparatus may be a communication device or a communication apparatus, for example, a chip system, that can support the communication device in implementing a function required in the method. For example, the second communication apparatus is a network function repository network element, a chip disposed in the network function repository network element, or another component configured to implement a function of the network function repository network element. An example in which the communication device is the network function repository network element is used below for description. The method includes:

The network function repository network element receives network element requirement information sent by a first control plane network element, where the network element requirement information indicates the network function repository network element to provide information about a media plane network element that can provide a second media plane service associated with a call service requested by a terminal device. Preferred network element information indicates that the first media plane network element is a preferred media plane network element. The network function repository network element determines, based on the network element requirement information and the preferred network element information, a target media plane network element that can provide the second media plane service associated with the call service. The network function repository network element sends information about the target media plane network element to the first control plane network element. The target media plane network element is configured to provide the second media plane service.

In a possible implementation, that the network function repository network element receives the network element requirement information sent by the first control plane network element includes: the network function repository network element receives the network element requirement information and the preferred network element information that are sent by the first control plane network element.

In a possible implementation, that the preferred network element information indicates that the first media plane network element is the preferred media plane network element includes: The preferred network element information indicates to use the first media plane network element as a target media plane network element when the network function repository network element determines that the first media plane network element can provide the second media plane service.

In a possible implementation, that the network function repository network element receives the network element requirement information and the preferred network element information that are sent by the first control plane network element includes: The network function repository network element receives a service discovery request message sent by the first control plane network element, where the service discovery request message includes the network element requirement information and the preferred network element information.

In a possible implementation, the first media plane service includes an access service or an interworking service, and the second media plane service includes a resource service.

In a possible implementation, before the network function repository network element sends the information about the target media plane network element to the first control plane network element, the method further includes: The network function repository network element determines whether the first media plane network element can provide the second media plane service. If the network function repository network element determines that the first media plane network element can provide the second media plane service, the network function repository network element determines to use the first media plane network element as the target media plane network element. If the network function repository network element determines that the first media plane network element cannot provide the second media plane service, the network function repository network element selects a media plane network element that can support the second media plane service as the target media plane network element.

In a possible implementation, that the network function repository network element determines whether the first media plane network element can support the second media plane service includes: The network function repository network element obtains capability information of the first media plane network element, where the capability information indicates a service that can be provided by the first media plane network element. The network function repository network element determines, based on the capability information, whether the first media plane network element can provide the second media plane service.

For technical effects brought by the second aspect and the possible implementations of the second aspect, refer to the descriptions of the technical effects of the first aspect and the possible implementations of the first aspect.

According to a third aspect, an embodiment of this application provides a communication apparatus. The communication apparatus has a function of implementing behavior in the method embodiment of the first aspect or the second aspect. For beneficial effects, refer to the descriptions of the first aspect and the second aspect. Details are not described herein again. The communication apparatus may be the first control plane network element in the first aspect, or the communication apparatus may be an apparatus, for example, a chip or a chip system, that can implement the method provided in the first aspect. Alternatively, the communication apparatus may be the network function repository network element in the second aspect, or the communication apparatus may be an apparatus, for example, a chip or a chip system, that can implement the method provided in the second aspect.

In a possible design, the communication apparatus includes a corresponding means (means) or module configured to perform the method in the first aspect or the second aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example of the first aspect or the second aspect. For details, refer to the detailed descriptions in the method example. Details are not described herein again.

According to a fourth aspect, an embodiment of this application provides a communication apparatus. The communication apparatus may be the communication apparatus in the first aspect or the second aspect in the foregoing embodiment, or a chip or a chip system disposed in the communication apparatus in the first aspect or the second aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first control plane network element or the network function repository network element in the foregoing method embodiments.

According to a fifth aspect, an embodiment of this application provides a communication apparatus. The communication apparatus includes an input/output interface and a logic circuit. The input/output interface is configured to input and/or output information. The logic circuit is configured to perform the method in the first aspect or the second aspect.

According to a sixth aspect, an embodiment of this application provides a chip system. The chip system includes a processor, may further include a memory and/or a communication interface, and is configured to implement the method in the first aspect or the second aspect. In a possible implementation, the chip system further includes the memory, configured to store a computer program. The chip system may include a chip, or may include a chip and another discrete component.

According to a seventh aspect, an embodiment of this application provides a communication system. The communication system includes a first control plane network element, a media plane network element, and a network function repository network element. The first control plane network element is configured to perform the method performed by the first control plane network element in the first aspect, and the network function repository network element is configured to perform the method performed by the network function repository network element in the second aspect.

According to an eighth aspect, this application provides a computer-readable storage medium. The computer-readable storage medium stores a computer program. When the computer program is run, the method in the first aspect or the second aspect is implemented.

According to a ninth aspect, a computer program product is provided. The computer program product includes computer program code. When the computer program code is run, the method in the first aspect or the second aspect is performed.

For beneficial effects of the third aspect to the ninth aspect and the implementations of the third aspect to the ninth aspect, refer to the descriptions of the beneficial effects of the first aspect and the second aspect and the implementations of the first aspect and the second aspect.

### BRIEF DESCRIPTION OF DRAWINGS

FIG. 1 is a diagram of a network architecture of a communication system according to an embodiment of this application;
FIG. 2 is a diagram of establishing a connection of a media transmission channel according to an embodiment of this application;
FIG. 3 is another diagram of establishing a connection of a media transmission channel according to an embodiment of this application;
FIG. 4A and FIG. 4B are schematic flowcharts of a first communication method according to an embodiment of this application;
FIG. 5A and FIG. 5B are schematic flowcharts of a second communication method according to an embodiment of this application;
FIG. 6 is a diagram of another network architecture of a communication system according to an embodiment of this application;
FIG. 7 is a diagram of establishing a connection of a media transmission channel according to an embodiment of this application;
FIG. 8 is another diagram of establishing a connection of a media transmission channel according to an embodiment of this application;
FIG. 9 is a schematic flowchart of a third communication method according to an embodiment of this application;
FIG. 10 is a schematic flowchart of a fourth communication method according to an embodiment of this application;
FIG. 11 is a diagram of a structure of a communication apparatus according to an embodiment of this application; and
FIG. 12 is a diagram of another structure of a communication apparatus according to an embodiment of this application.

### DESCRIPTION OF EMBODIMENTS

Embodiments of this application mainly provide a communication method based on an IP multimedia subsystem (IP multimedia subsystem, IMS). To help a person skilled in the art understand the technical solutions provided in embodiments of this application, some terms in embodiments of this application are first explained and described.
(1) A media plane service is also referred to as a media service, and refers to a network service provided for a network entity (for example, a control plane network element) through a service based interface (service based interface, SBI). A process of implementing the network service or providing the network service includes providing, for a terminal device (a calling terminal device and/or a called terminal device) in a call service, media related services such as a media stream transmission service and a media processing service, for example, an RBT service oriented to a terminal device of a call service initiator, and a color ringing service oriented to a terminal device of a call service receiver. For example, media plane services may be classified into three types: a resource service, an access service, and an interworking service. The following separately describes the three types of services.

The resource service is also referred to as a media application service or a media resource service. The resource service may also be understood as a service that needs to provide a media resource, for example, a digit collection (which refers to receiving a number input by a terminal device, for example, a menu number) service, an announcement playing (which refers to playing audio content to a terminal device) service, a voice conference service, a video conference service, a data channel (data channel, DC) service, and an extended reality management (extended reality management, XRM) service. Correspondingly, a process of implementing the resource service or providing the resource service includes providing a resource media stream transmission service, for example, an RBT service, for the terminal device in the call service.

The access service is mainly a service that helps the terminal device in the call service implement NAT traversal of a media stream. Correspondingly, a process of implementing the access service or providing the access service includes providing an access media stream transmission service, for example, a NAT traversal service, for the terminal device in the call service.

The interworking service mainly helps the terminal device in the call service implement network address conversion of a media stream, for example, conversion between an IPv4 address and an IPv6 address, so that the terminal device can exchange media streams with a peer network in the call service. Correspondingly, a process of implementing the interworking service or providing the interworking service includes providing an interworking media stream transmission service, for example, an address conversion service, for the terminal device in the call service.

A network side device in embodiments of this application is a general term of a core network, a gateway, an access network device, and the like that are responsible for processing the media plane service. Specific devices included in the network side device are described in the following by using an example. Details are not described herein. The "terminal device" in embodiments of this application may also be referred to as a terminal, user equipment (user equipment, UE), a mobile station, a mobile terminal, or the like. The terminal device may be any device that supports a call function, for example, a mobile phone, a computer, a virtual reality (virtual reality, VR) device, an augmented reality (augmented reality, AR) device, a wearable device, a vehicle, an uncrewed aerial vehicle, a helicopter, an airplane, a ship, a robot, a robot arm, or a smart home device. A specific call network used by the terminal device and a specific device form of the terminal device are not limited in embodiments of this application. The terminal device may implement a call based on a telephone line, implement a call based on an IP line, or implement a call based on another technology. A specific call technology used by the terminal device is not limited in embodiments of this application.

(2) A media plane (media plane) network element is also referred to as a media plane function network element, and refers to a function network element that can provide a media plane service. The media plane network element may provide a media stream transmission service for a terminal device by using a media capability of the media plane network element. The media plane network element exposes the media capability of the media plane network element to another network entity (for example, a control plane network element) through an SBI, so that the another network entity can indirectly provide the media stream transmission service for the terminal device. For example, the media plane network element may include a media processing network element on an access side, a media processing network element on a central side, and a media processing network element on an interworking side. The media processing network element on the access side may implement functions such as user media access proxy and forwarding, NAT traversal, and audio transcoding. For example, the media processing network element on the access side includes an IMS access gateway (IMS Access gateway, IMS-AGW). The media processing network element on the interworking side may implement media interworking between an IMS and another network. For example, the media processing network element on the interworking side may include a transition gateway (transition gateway, TrGW), configured to implement interworking of media planes between the IMS and another IP network. For another example, the media processing network element on the interworking side may include an IP multimedia media gateway (IP multimedia media gateway, IM-MGW), and may implement interworking of media planes between the IMS network and another non-IP network. The media processing network element on the central side may provide a media resource, for example, an announcement playing resource, a digit collection resource, a voice conference resource, a DC resource, or an XRM resource, for the media plane service. For example, the media processing network element on the central side may include a multimedia resource function processor (multimedia resource function processor, MRFP). It may be understood that, an example in which the MRFP is deployed on the central side is used herein. In some embodiments, the MRFP may alternatively be deployed on the access side. In other words, the media processing network element on the access side may also include the MRFP. It may be understood that the media plane network element may be a physical network element or may be a logical network element (or a virtual network element).

Based on types of media plane services that can be provided, media plane network elements may be classified into a converged media plane network element and a non-converged media plane network element. The converged media plane network element refers to a media plane network element that can provide a plurality of media plane services, for example, a media plane network element that provides both an access service and a resource service. The non-converged media plane network element refers to a network element that provides a single media plane service, for example, a media plane service that provides only an access service.

(3) A media resource refers to a computer resource used by an MRFP to provide a resource service, for example, a resource used by a media processing network element on a central side to provide the resource service. For example, the media resource may include an announcement playing resource, a digit collection resource, a voice conference resource, a video stream resource, a DC service resource, or an XRM service resource.

(4) A media capability refers to a capability of providing a media plane service or a capability of providing a media resource required by the media plane service, indicating whether a media plane network element can provide the media resource. For example, that the media plane network element has a media access capability may also be understood as that the media plane network element can implement a media access function of a user. For another example, that the media plane network element has a capability of interworking with an IP network may also be understood as that the media plane network element can implement interworking of media planes between an IMS network and another IP network.

(5) Media processing (a media processing operation) includes media service processing (a media service operation), media access processing (a media access operation), and media interworking processing (a media interworking operation). The media service processing (the media service operation) mainly refers to processing of functions provided by a media processing network element on a central side, such as announcement playing, digit collection, a voice conference, a DC, and XRM. The media access processing (the media access operation) mainly includes access processing provided by a media processing network element on an access side, and the media interworking processing (the media interworking operation) mainly includes interworking processing and the like provided by a media processing network element on an interworking side.

(6) An application service network element may be configured to obtain information about an initially accessed media plane network element, or may request the media plane network element to provide a media plane service. In a 5G communication system, the application service network element may be an application server (application server, AS) network element. In a future communication system (for example, a 6G communication system), the application service network element may still be the AS network element, or may have another name. This is not limited in embodiments of this application.

(7) A call control function network element is a functional entity in an IMS network, is a core of the entire IMS network, and is mainly responsible for signaling control in a multimedia call session process. In a 5G communication system, the call control function network element may be a (serving-call session control function, CSCF) network element. In a future communication system (for example, a 6G communication system), the call control function network element may still be the CSCF network element, or may have another name. This is not limited in embodiments of this application.

CSCF network elements may be further classified, based on functions, into a serving-call control function (serving-call session control function, SCSCF) network element, an interrogating-call session control function (interrogating-call session control function, ICSCF) network element, a proxy-call session control function (proxy-call session control function, PCSCF) network element, and the like. The SCSCF network element is a service processing node of the IMS network, and is responsible for IMS network registration of a terminal device and related media service processing. The PCSCF network element is located in a visited network, and is an edge network node of the IMS network, or may be an ingress node for a user to access the IMS network. A function of the PCSCF network element in the IMS network is similar to a function of executing a proxy service. Information from the terminal device or information sent to the terminal device needs to be forwarded by the P-CSCF network element. For example, the PCSCF network element may be responsible for forwarding SIP signaling between a SIP user and a home network. The ICSCF network element is located in the home network, and is a unified ingress point of the home network. The ICSCF network element may be connected to the SCSCF network element and the PCSCF network element, and is configured to provide an ingress to the home network for the terminal device. When roaming to another network, the terminal device sends a message to the PCSCF network element. The PCSCF network element may forward the message from the terminal device to the ICSCF network element, and send the message from the terminal device to the SCSCF network element through the ICSCF network element. The ICSCF network element may be responsible for allocating an SCSCF network element serving a user or interrogating the SCSCF network element serving the user. In addition, the ICSCF network element/SCSCF network element is connected to the PCSCF network element in a local network through a Mw interface.

In comparison with a media plane network element that provides a media service, the PCSCF network element, the SCSCF network element, and the ICSCF network element are all control plane network elements. In terms of functions, it may be considered that the PCSCF network element is an access control plane network element, and the ICSCF network element is an interworking control plane network element. It may be understood that, the PCSCF network element, the SCSCF network element, and the ICSCF network element may be independently configured in different entities, or may be integrated into a same entity. In the following, for ease of understanding and description, the PCSCF network element, the SCSCF network element, and the ICSCF network element are collectively referred to as a CSCF network element. In this specification, the PCSCF network element may be replaced with a P-CSCF network element, the SCSCF network element may be replaced with an S-CSCF network element, and the ICSCF network element may be replaced with an I-CSCF network element.

The media plane network element may be connected to the call control function network element through a media gateway control network element. The media gateway control network element may be understood as a gateway that enables communication between an IMS user and a client user. All call control signaling from the client user is directed to the media gateway control network element. The media gateway control network element is mainly responsible for protocol conversion between an integrated services digital network (integrated services digital network, ISDN) user part or Bearer Independent Call Control and a session initiation protocol (session initiation protocol, SIP), and forwarding a session to an IMS. In the 5G communication system, the media gateway control network element may be a media gateway control function (media gateway control function, MGCF) network element. In the future communication system (for example, the 6G communication system), the media gateway control network element may still be the MGCF, or may have another name. This is not limited in embodiments of this application. The MGCF network element is connected to the P-CSCF network element/I-CSCF network element/S-CSCF network element in the local network.

The media plane network element may alternatively be connected to the call control function network element through an interconnection border control network element. The interconnection border control network element is a border functional entity of a control plane between two operator networks. In the 5G communication system, the interconnection border control network element may be an interconnection border control function (interconnection border control function, IBCF) network element. In embodiments of this application, in the future communication system (for example, the 6G communication system), the interconnection border control network element may still be the IBCF network element, or may have another name. This is not limited in embodiments of this application. The IBCF network element/a TrGW is deployed between different IMS core networks or between the IMS core network and another IP network. Networks are connected through IP trunking. The IBCF is connected to the PCSCF/ICSCF/SCSCF in the local network. A signaling plane of the IBCF is connected to another network through an Ici interface. A media plane (the TrGW) of the IBCF network element is connected to another network through an Izi interface. Each operator may select an interworking node based on an attribute of a calling user. For example, when the calling user is an IMS user, the IBCF network element/TrGW is used for interworking.

(8) A network repository function network element may be configured to collect specific information of a network entity, for example, a service that can be provided by the network entity and identification information implemented by a network. For example, the network repository function network element may collect information such as a service that can be provided by a media plane network element. In a 5G communication system, the network function repository network element may be a network repository function (network repository function, NRF) network element defined in a 3GPP standard specification. In a future communication system (for example, a 6G communication system), the network function repository network element may still be the NRF network element, or may have another name. This is not limited in embodiments of this application.

(9) A media endpoint is a logical entity located in a media gateway, for example, a media plane network element, and may send/receive a media stream and/or a control stream. For example, the media endpoint may be represented by an IP port or an asynchronous transfer mode (asynchronous transfer mode, ATM) port. The IP port includes an IP address and a port number. For details, refer to related content of the H.248 protocol.

The terms "system" and "network" may be used interchangeably in embodiments of this application. In embodiments of this application, "a plurality of" may also be understood as "at least two". "At least one" may be understood as one or more, for example, understood as one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship between associated objects, and indicates that three relationships may exist. For example, A and/or B may indicate the following cases: Only A exists, both A and B exist, and only B exists. In addition, unless otherwise specified, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects. For example, a first control plane network element and a second control plane network element are merely intended to distinguish between different control plane network elements, but are not intended to limit functions, priorities, importance, or the like of the two control plane network elements. In embodiments of this application, "if" and "assuming that" may be interchangeable, and unless otherwise specified, "when" and "in a case in which..." may be interchangeable.

The foregoing describes some terms in embodiments of this application. The following describes some content related to embodiments of this application.

A control plane network element may invoke a plurality of media plane network elements in combination, to implement a specific media capability or a specific media service. It may be understood that, in embodiments of this application, a plurality of media capabilities may be distributed in a plurality of media plane network elements, or a plurality of media capabilities may be integrated into one media plane network element.

In embodiments of this application, the media plane network element may also be referred to as a unified media plane network element or a unified media plane function (unified media function, UMF) network element. It may be understood that a specific name of the unified media plane network element is not limited in embodiments of this application. In addition, in embodiments of this application, unless otherwise specified, the UMF network element is used as an example of the media plane network element.

An IMS network includes at least one control plane network element and at least one media plane network element. The control plane network element may include a CSCF network element, an AS, a session border controller (session border controller, SBC), and a multimedia telephony (multimedia telephony, MMTEL) application service (AS) network element. The CSCF network element may include an SCSCF network element, a PCSCF network element, an ICSCF network element, and the like. The media plane network element includes the UMF network element. One independent UMF network element may be obtained through normalization of a plurality of media plane network elements, and is referred to as a converged UMF network element. Relatively, if one UMF network element is not obtained through normalization of a plurality of media plane network elements, the UMF network element is a non-converged UMF network element. Alternatively, it may be understood that the converged UMF network element can provide a plurality of types of media plane services, and the non-converged UMF network element provides a small quantity of types of media plane services, for example, provides one type of media plane service.

Currently, all media plane services are provided by a UMF network element initially selected by a control plane network element in a call service process. Generally, the initially selected UMF network element is a UMF network element selected for an access service or an interworking service. However, the control plane network element may subsequently require a resource service. If the initially accessed UMF network element cannot provide the resource service for the control plane network element due to a capability limitation of the UMF network element, the UMF network element cannot provide a media stream transmission service for a corresponding terminal device.

In view of this, the solutions in embodiments of this application are provided. In embodiments of this application, when a control plane network element requires a media plane service, the control plane network element may notify a network function repository network element of an initially selected media plane network element and a required media plane service. The network function repository network element may determine whether the initially selected media plane network element can support the media plane service required by the control plane network element. If the initially selected media plane network element cannot support the media plane service required by the control plane network element, the network function repository network element may reselect a media plane network element for the media plane service, to reduce failures of the media plane service as much as possible. On the contrary, if the initially selected media plane network element can support the media plane service required by the control plane network element, the network function repository network element may notify the control plane network element to preferentially perform the media plane service by using the initially accessed media plane network element. The control plane network element has known a media endpoint allocated by the initially selected media plane network element. Therefore, the control plane network element does not need to trigger a procedure of requesting to allocate a media endpoint, and can establish a channel between a terminal device and the media plane network element by using the media endpoint allocated by the initially selected media plane network element, so that a latency of the media plane service can be reduced.

The technical solutions provided in embodiments of this application may be applied to a 4th generation mobile communication technology (4th generation, 4G) system, a 5G system, or a future mobile communication system.

In a possible application scenario, a terminal device may initiate a call request to a control plane network element, to request a terminal device on a peer end to perform a function required by the terminal device. For example, a called terminal device plays a special ring back tone for a calling terminal device.

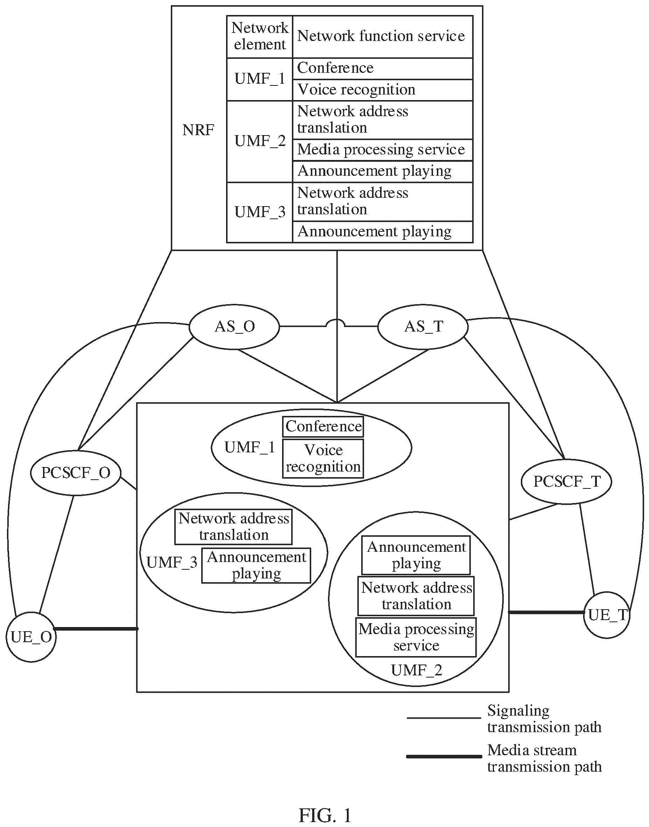

FIG. 1 is a diagram of an architecture of a communication system. The communication system may include a network function repository network element, at least one control plane network element, at least one media plane network element, and at least one terminal device. In FIG. 1, an example in which the network function repository network element is an NRF network element, the control plane network element is a PCSCF network element, and the media plane network element is a UMF network element is used. It may be understood that a UMF network element in this embodiment of this application may be a converged UMF network element, or may be a non-converged UMF network element. Any UMF network element may initiate service registration with the NRF network element, to register information about the UMF network element with the NRF network element. For example, each UMF network element may register network function service (network function service, NFS) information of the UMF network element with the NRF network element. Media plane services that can be provided by different UMFs may be different or the same.

As shown in FIG. 1, UMF_1, UMF_2, and UMF_3 are three UMF network elements. For example, media plane services that can be provided by UMF_1 include a conference service and a voice recognition service, media plane services that can be provided by UMF_2 include a network address translation service, an announcement playing service, and a media processing service, and media plane services that can be provided by UMF_3 include a network address translation service and an announcement playing service. Correspondingly, each UMF network element further registers identification information of the UMF network element with the NRF network element. The NRF network element may store information about each UMF network element. It may be understood that the NRF network element may correspondingly store the NFS information of the UMF network element and the identification information of the UMF network element, so that the NRF network element can determine a service that can be provided by each UMF network element. It may be understood that, in addition to the NFS information and the identification information, the information about the UMF network element may include other information. This embodiment of this application focuses on a media service that can be provided by each UMF network element. Therefore, other information about the UMF network element is not described. It may be understood that FIG. 1 is merely an example. An IMS network to which embodiments of this application are applicable includes but is not limited to the network elements shown in FIG. 1, and may further include another device that is not shown in FIG. 1, for example, an SCSCF network element. Examples are not listed one by one herein. In addition, a distribution form of the network elements in FIG. 1 is merely an example, and the distribution form of the network elements is not limited in embodiments of this application.

In FIG. 1, AS network elements are classified into a calling side AS network element (denoted as AS_O) and a called side AS network element (denoted as AS_T), PCSCF network elements are classified into a calling side PCSCF network element (denoted as PCSCF_O) and a called side PCSCF network element (denoted as PCSCF_T), and terminal devices are classified into a calling side terminal device (denoted as UE_O) and a called side terminal device (denoted as UE_T). The UMF network element may be connected to the NRF network element, PCSCF_O, PCSCF_T, UE_O, and UE_T. The NRF network element may be connected to PCSCF_O and PCSCF_T. UE_O may be connected to PCSCF_O, and UE_T may be connected to PCSCF_T. AS_O may be connected to AS_T and PCSCF_O. AS_T may be connected to AS_O and PCSCF_T. For an interface between the network elements in FIG. 1, refer to an existing interface protocol definition. Details are not described herein.

The UMF network element may provide a media stream transmission service for UE_O, or may provide a media stream transmission service for UE_T. In a call service process, UE_O, UE_T, and network elements such as the UMF network element, the NRF network element, PCSCF_O, and PCSCF_T in the network interact with each other, so that a necessary media transmission channel (or connection) is established between the UMF network element and UE_O and/or UE_T, and the UMF network element provides the media stream transmission service for UE_O and/or UE_T. In this embodiment of this application, a media endpoint that is of one UMF network element and that is connected to UE and a media endpoint that is of the UMF network element and that is connected to another UMF network element are interconnected by default. It may also be understood as that, for one UMF network element, a media endpoint connected to UE receives information, and forwards the information to a media endpoint that is of the UMF network element and that is connected to another UMF network element by default. For example, the media endpoint connected to the UE receives the information, and may broadcast the information. Similarly, for one UMF network element, a media endpoint connected to another UMF network element receives information, and forwards the information to a media endpoint that is of the UMF network element and that is connected to UE by default. For example, the media endpoint connected to the another UMF network element receives the information, and may broadcast the information.

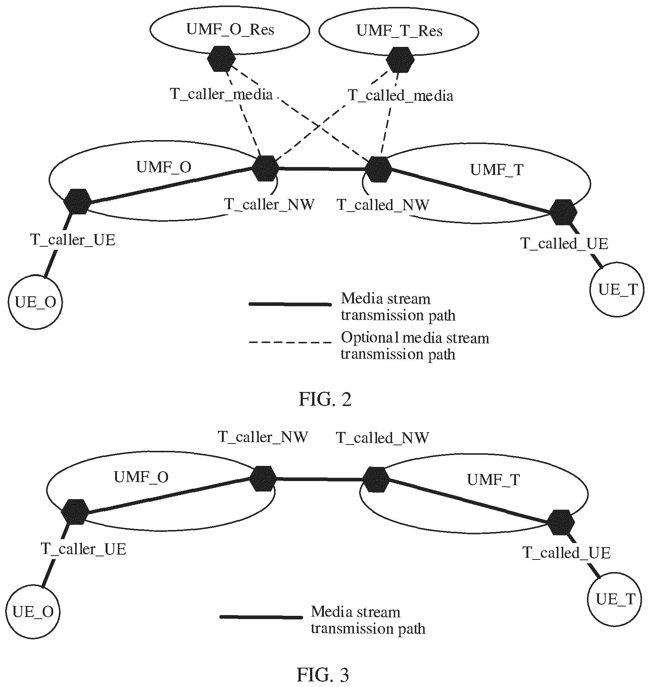

FIG. 2 is a diagram of establishing a connection of a media transmission channel according to an embodiment of this application. In FIG. 2, an example in which UMF_O, UMF_O_Res, UMF_T, UMF_T_Res, UE_O and UE_T are included is used. A control plane network element on an O side (namely, a calling side) may request a UMF network element to provide a media stream transmission service for UE_O and/or UE_T. UE_T may request, through a control plane network element on a T side (namely, a called side), a network side to provide a media stream transmission service. UMF_O is a UMF network element initially selected by the control plane network element (for example, PCSCF_O) on the O side for the O side in a process in which UE_O joins a call session, and can provide an access media stream transmission service for UE_O and/or UE_T. UMF_O_Res is a UMF network element that can provide a resource media stream transmission service for UE_O and/or UE_T. UMF_T is a UMF network element initially selected by the control plane network element (for example, PCSCF_T) on the T side for the T side in a process in which UE_T joins the call session, and can provide an access media stream transmission service for UE_O and/or UE_T. UMF_T_Res is a UMF network element that can provide a resource media stream transmission service for UE_O and/or UE_T. The initially selected UMF network element may also be understood as a UMF network element selected for a side on which a PCSCF network element is located when the PCSCF network element applies for a media endpoint for the first time in a process of the call session.

In a process in which UE_T joins the call session, UMF_T allocates a media endpoint (denoted as T_called_UE) connected to UE_T and a media endpoint (denoted as T_called_NW) connected to another UMF. Similarly, in a process in which UE_O joins the call session, the UMF_O allocates a media endpoint (denoted as T_caller_UE) connected to UE_O and a media endpoint (denoted as T_caller_NW) connected to another UMF. In addition, in the foregoing access process, UE_T is connected to T_called_UE, and UE_O is connected to T_caller_UE. Therefore, when a connection is established between T_called_NW and T_caller_NW, a connection of a media transmission channel between UE_O and UE_T may be implemented.

However, when UMF_T_Res can provide the media stream transmission service for UE_T, because the initially selected UMF network element is UMF_T, PCSCF_T does not know a media endpoint on UMF_T_Res. In this case, PCSCF_T requests to obtain the media endpoint on UMF_T_Res, to implement a connection of a media transmission channel between UMF_T_Res and UE_O and/or UE_T. For example, PCSCF_T may request UMF_T_Res to allocate a media endpoint, UMF_T_Res may allocate a media endpoint T_called_media, and UMF_T_Res provides a media stream transmission service through T_called_media. When T_called_media is connected to T_caller_NW, T_called_media may provide a media stream transmission service for UE_O. Similarly, PCSCF_O may request UMF_O to allocate a media endpoint, UMF_O_Res may allocate a media endpoint T_caller_media, and UMF_O_Res provides a media stream transmission service through T_caller_media. When T_caller_media is connected to T_called_NW, T_caller_media may provide a media stream transmission service for UE_T.

FIG. 3 is another diagram of establishing a connection of a media according to an embodiment of this application. A difference between FIG. 3 and FIG. 2 lies in that, in FIG. 3, UMF_O is a UMF network element that not only can provide an access media stream transmission service for UE_O, but also can provide a resource media stream transmission service for UE_T and/or UE_O. UMF_T is a UMF network element that not only can provide an access media stream transmission service for UE_T, but also can provide a resource media stream transmission service for UE_O/UE_T. It may also be understood as that, a UMF network element that can provide a resource media stream transmission service for UE_T is a UMF network element that is initially selected for UE_T and that provides an access media stream transmission service. A UMF network element that can provide a resource media stream transmission service for UE_O is a UMF network element that is initially selected for UE_O and that provides an access media stream transmission service. In this case, in a process in which UE_T joins a call session, UMF_T has allocated a media endpoint (denoted as T_called_UE) connected to UE_T and a media endpoint (denoted as T_called_NW) connected to another UMF. Therefore, PCSCF_T does not need to trigger a procedure of requesting UMF_T to allocate an endpoint. Similarly, PCSCF_O does not need to trigger a procedure of requesting UMF_O to allocate an endpoint.

In a process in which UE joins the call session, a UMF network element initially selected by a PCSCF network element usually provides an access media stream transmission service. However, if a network side subsequently needs to provide a resource media stream transmission service for the UE, the initially selected UMF network element may fail to provide the resource media stream transmission service required by the UE for the UE due to a capability limitation of the UMF network element. Consequently, a failure of the resource media stream transmission service is caused.

Therefore, this application provides a communication method, to reduce failures of a media stream transmission service as much as possible. The following describes in detail the method provided in embodiments of this application with reference to the accompanying drawings. In the following description process, an example in which the method may be applied to the architecture shown in any one of FIG. 1 to FIG. 3 is used. In embodiments of this application, names of all network elements are merely used as examples, and may also be referred to as other names in future communication, or the network element in this application may be replaced by another entity or device that has a same function in future communication. This is not limited in this application. In embodiments of this application, media plane services include an access service, an interworking service, and a resource service. Control plane network elements include an access control plane network element, an interworking control plane network element, and another type of control plane network element. The access control plane network element may be a PCSCF network element. The interworking control plane network element may be an ICSCF network element. The another type of control plane network element may be an AS network element or an SCSCF network element. An example in which a media plane network element is a UMF network element is used. The UMF network element may be a converged UMF network element, or may be a non-converged UMF network element.

Based on the difference between FIG. 2 and FIG. 3, a call procedure varies. The following separately describes the solutions provided in embodiments of this application by using the architectures shown in FIG. 2 and FIG. 3. In the architecture shown in FIG. 2, the UMF network element may alternatively be considered as a non-converged UMF network element. Relatively, in the architecture shown in FIG. 3, an example in which the UMF network element may be considered as a converged UMF network element is used. In the following descriptions, an example in which a resource media stream transmission service is announcement playing is used. A type of the resource media stream transmission service is not limited in embodiments of this application. For example, the resource media stream transmission service may be a DC service, an XR service, or a conference service. In the following, an example in which a UMF network element on a T side provides an announcement playing service for UE_O is used.

First, the solutions provided in embodiments of this application in the architecture shown in FIG. 2 are described. To be specific, the UMF network element that is on the T side and that provides the announcement playing service for UE_O is a non-converged UMF network element, in other words, the UMF network element that provides the announcement playing service for UE_O and a UMF network element initially selected for UE_T are not a same network element. For example, in FIG. 2, the UMF network element initially selected for UE_T is UMF_T, and the UMF network element that provides the announcement playing service for UE_O is UMF_T_Res. Correspondingly, a UMF network element initially selected for UE_O is UMF_O.

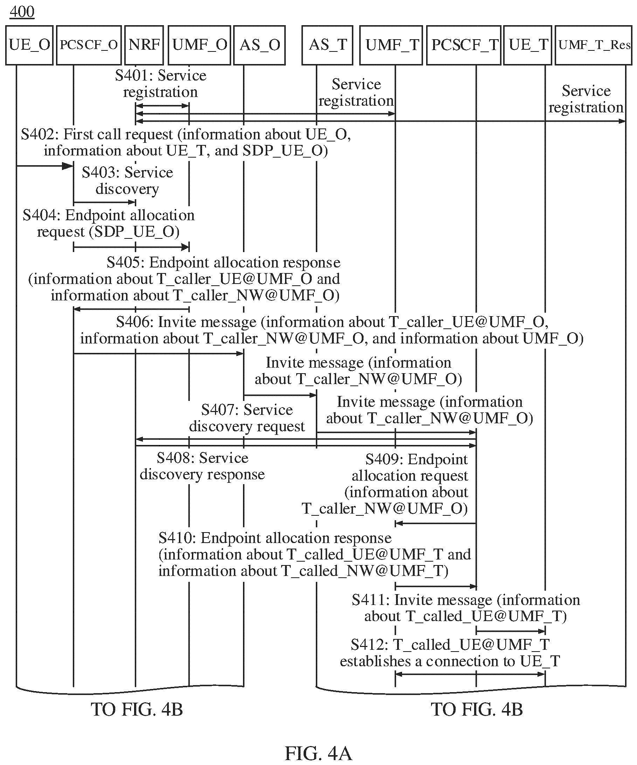

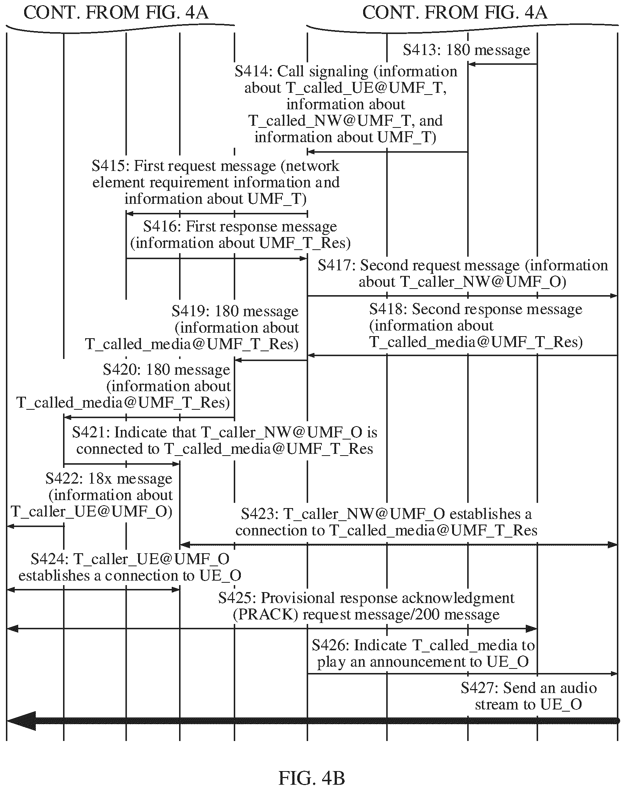

FIG. 4A and FIG. 4B are schematic flowcharts of a communication method 400 according to an embodiment of this application. An example in which the communication method is applied to the architecture shown in FIG. 2 is used. In FIG. 4A and FIG. 4B, T_caller_UE@UMF_O refers to a media endpoint T_caller_UE of UMF_O. Similarly, T_caller_NW@UMF_O refers to a media endpoint T_caller_NW of UMF_O, T_called_UE@UMF_T refers to a media endpoint T_called_UE of UMF_T, T_called_UE@UMF_T refers to a media endpoint T_called_UE of UMF_T, and T_called_media@UMF_T_Res refers to a media endpoint T_called_media of UMF_T_Res. UMF_T in FIG. 4A and FIG. 4B is a first media plane network element in this embodiment of this application, namely, an initially selected UMF network element. UMF_T_Res refers to a target media plane network element. AS_T refers to a first control network element, and PCSCF_O refers to a second control plane network element. In the embodiment shown in FIG. 4A and FIG. 4B, an announcement playing service is a second media plane service in this embodiment of this application. Correspondingly, a service for UE_T to access a network is a first media plane service, namely, an access service. In FIG. 4A and FIG. 4B, a thin line indicates that signaling is exchanged, and a thick line indicates that media streams are exchanged.

S401: Each UMF initiates service registration with an NRF network element.

The UMF network element may send a registration request to the NRF network element. The registration request may include information about the UMF. After obtaining the information about the UMF from the registration request, the NRF network element may store the information about the UMF. The information about the UMF may include information about a service that can be provided by the UMF. The information about the UMF also includes information for identifying the UMF, for example, an ID or an IP address of the UMF. It may be understood that there is a correspondence between NFS information of the UMF and identification information of the UMF, so that the NRF network element can determine, based on the identification information of the UMF, a service that can be provided by each UMF. As shown in FIG. 4A and FIG. 4B, UMF_O may initiate service registration with the NRF network element, and UMF_T and UMF_T_Res may also initiate registration requests to the NRF network element.

S402: UE_O sends a first call request to PCSCF_O, and correspondingly, PCSCF_O receives the first call request sent by UE_O.

For example, the first call request is an invite (invite) message in a call procedure. The first call request may include information about UE_O, information about UE_T, and session description protocol (session description protocol, SDP) information related to the first call request. It may be understood that an SDP is specific to UE_O. For ease of description, the SDP information included in the first call request is denoted as SDP_UE_O. It may be understood that SDP_UE_O may include media information of UE_O, for example, a media type (an audio, a video, and the like), a media format (an H.264 video and the like), a transmission address, and a port.

S403: PCSCF_O initiates a service discovery request to the NRF network element, where the service discovery request is for requesting information about a UMF that provides an access service for UE_O.

For example, PCSCF_O sends the service discovery request to the NRF network element, and correspondingly, the NRF network element receives the service discovery request sent by PCSCF_O, where the service discovery request may be for requesting the UMF network element that can provide the access service. It may be understood that information about a plurality of UMF network elements is registered with the NRF network element. Different UMFs may have different capabilities, can also provide different media resources, and can also provide different media stream transmission services. After receiving the service discovery request sent by PCSCF_O, the NRF network element may interrogate a capability of each UMF network element, to determine a media stream transmission service that can be provided by each UMF network element. Specifically, the NRF network element may obtain stored capability information of each UMF network element. The capability information may indicate a media service that can be provided by the UMF network element, so that the NRF network element determines, based on the capability information of each UMF network element, the UMF network element that can provide the access service. For example, in FIG. 2, the NRF network element determines that the UMF network element that can provide the access service for UE_O is UMF_O.

After determining UMF_O, the NRF network element may provide information about UMF_O for PCSCF_O. For example, the NRF network element sends a service discovery response to PCSCF_O, where the service discovery response includes the information about UMF_O, for example, identification information and an IP address of UMF_O.

S404: PCSCF_O sends an endpoint allocation request to UMF_O, and correspondingly, UMF_O receives the endpoint allocation request sent by PCSCF_O.

The endpoint allocation request may be for requesting UMF_O to allocate a media endpoint, or requesting to obtain information about a media endpoint of UMF_O, for example, an IP address and a port of the media endpoint of UMF_O, so that UE_O accesses a network based on the media endpoint allocated by UMF_O.

The endpoint allocation request may include the SDP information, namely, SDP_UE_O, in the first call request. UMF_O may determine, based on SDP_UE_O, a media endpoint (which may be denoted as T_caller_UE) connected to UE_O, and determine a media endpoint (denoted as T_caller_NW) connected to another UMF (where UMF_T is used as an example in this embodiment of this application).

S405: UMF_O sends an endpoint allocation response to PCSCF_O, and correspondingly, PCSCF_O receives the endpoint allocation response sent by UMF_O.

The endpoint allocation response may include the information about the media endpoint allocated by UMF_O. For example, UMF_O may allocate two media endpoints, namely, T_caller_UE and T_caller_NW. T_caller_NW is a media endpoint that is of UMF_O and that is connected to UMF_T. The endpoint allocation response may include information about T_caller_UE and information about T_caller_NW. As shown in FIG. 4A and FIG. 4B, the endpoint allocation response includes information about T_caller_UE@UMF_O and information about T_caller_NW@UMF_O. The information about T_caller_UE may include an IP address and a port number of T_caller_UE. The information about T_caller_NW may include an IP address and a port number of T_caller_NW.

S406: PCSCF_O sends an invite message, and PCSCF_T receives the invite message.

PCSCF_O may change an IP address in the received SDP information to the IP address (denoted as IP_er_NW) of T_caller_NW, and create a header field of local media information (denoted as local-media), for example, local-media: T_caller_UE="UMF-beijing-haidian2\T-1"; T_caller_NW="UMF-beijing-haidian2\T-1"; and UMF_ori="UMF-beijing-haidian2". It may be understood that an information element T_caller_UE may indicate the information about T_caller_UE, an information element T_caller_NW may indicate the information about T_caller_NW, and an information element UMF_ori indicates the information about UMF_O.

Then, PCSCF_O forwards the invite message to PCSCF_T. It may be understood that PCSCF_O forwards the invite message to PCSCF_T through a plurality of network elements. The plurality of network elements include a network element on an O side and a network element on a T side. When forwarding the invite message to the network element on the T side, the network element on the O side deletes local-media in the invite message.

It may be understood that, similar to UE_O, UE_T may also request to access the network. To be specific, UE_T sends a request to a control plane network element on the T side, and PCSCF_T receives the request from UE_T, and requests, from the NRF network element, a UMF network element that can provide an access service for UE_T. The NRF network element may determine that the UMF network element that can provide the access service for UE_T is UMF_T. Similarly, PCSCF_O and PCSCF_T may subsequently also request UMF_T to allocate media endpoints.

S407: PCSCF_T sends a service discovery request to the NRF network element, and correspondingly, the NRF network element receives the service discovery request sent by PCSCF_T, where the service discovery request is for obtaining information about a UMF network element having a required access capability.

S408: The NRF network element sends a service discovery response to PCSCF_T, and correspondingly, PCSCF_T receives the service discovery response sent by the NRF network element, where the service discovery response indicates the UMF network element having the required access capability. For example, the service discovery response includes information about UMF_T.

S409: PCSCF_T sends an endpoint allocation request to UMF_T, and correspondingly, UMF_T receives the endpoint allocation request sent by PCSCF_T.

The endpoint allocation request may include the information about T_caller_NW@UMF_O, for example, the IP address of T_caller_NW. The endpoint allocation request may include SDP information, and the SDP information includes the information about T_caller_NW@UMF_O.

S410: UMF_T sends an endpoint allocation response to PCSCF_T, and correspondingly, PCSCF_T receives the endpoint allocation response sent by UMF_T.

The endpoint allocation response may include information about a media endpoint allocated by UMF_T. For example, UMF_T may allocate two media endpoints, namely, T_called_UE and T_called_NW. T_called_UE is a media endpoint that is of UMF_T and that is connected to UE_T, and T_called_NW is a media endpoint that is of UMF_T and that is connected to another UMF (where UMF_O is used as an example in this embodiment of this application). The endpoint allocation response includes information about T_called_UE@UMF_T and information about T_called_NW@UMF_T. The information about T_called_UE@UMF_T includes an IP address and a port number of T_called_UE. The information about T_called_NW@UMF_T includes an IP address and a port number of T_called_NW.

S411: PCSCF_T sends the invite message to UE_T, and correspondingly, UE_T receives the invite message sent by PCSCF_T.

After receiving the invite message sent by AS_T, PCSCF_T changes the IP address in the SDP information included in the invite message to the IP address of T_called_UE of UMF_T, and forwards the invite message to UE_T. In other words, the invite message sent by PCSCF_T to UE_T includes the information about T_called_UE@UMF_T, for example, the IP address and the port number of T_called_UE.

S412: UE_T establishes a connection to T_called_UE of UMF_T.

After receiving the invite message, UE_T determines based on the SDP information in the invite message, that the endpoint that is of UMF_T and that is connected to the UE_T is T_called_UE, and establishes the connection to T_called_UE of UMF_T.

S413: UE_T sends a 180 message to PCSCF_T, and correspondingly, PCSCF_T receives the 180 message sent by UE_T. The 180 message includes the information about T_called_UE@_UMF_T.

S414: AS_T receives call signaling.

The call signaling is associated with a call service between UE_O and UE_T. It may be understood that, triggered by call signaling of UE_T, an access control plane network element or an interworking control plane network element sends the call signaling to AS_T. The call signaling may be the 180 message in the call procedure.

The call signaling includes information about a media plane network element for providing a media plane service for the call service and information about a media endpoint of the media plane network element, for example, an IP address and a port number of the media endpoint. For example, after receiving the 180 message, PCSCF_T may create a header field of local-media, for example, local-media: T_called_UE="UMF-beijing-haidian1\T-1"; T_called_NW="UMF-beijing-haidian1\T-2"; and UMF_ori="UMF-beijing-haidian1". It may be understood that an information element T_called_UE may indicate information about T_called_UE, an information element T_called_NW may indicate information about T_called_NW, and an information element UMF_ori indicates information about UMF_T. Then, PCSCF_T forwards the 180 message, namely, the call signaling message, obtained by creating local-media. It can be learned that, the call signaling carries the information about T_called_UE of UMF_T and information about T_called_NW of UMF_T.

It may be understood that the call signaling received by AS_T may be call signaling forwarded by PCSCF_T and an SCSCF. That AS_T receives the call signaling may be that AS_T receives one piece of signaling. For example, the signaling includes the information about T_called_NW@UMF_T, the information about T_called_UE@UMF_T, the information about UMF_T, and the information about T_caller_UE@UMF_O. That AS_T receives the call signaling may alternatively be that AS_T receives a plurality of pieces of signaling. For example, AS_T separately receives two pieces of signaling, where one piece of signaling includes the information about T_called_NW@UMF_T, the information about T_called_UE@UMF_T, and the information about UMF_T, and the other piece of signaling includes the information about T_caller_UE@UMF_O. It may also be understood as that the information about T_caller_NW@UMF_O and the information about UMF_T may be carried in one piece of signaling, or may be carried in different pieces of signaling.

S415: AS_T sends a first request message to the NRF network element, and correspondingly, the NRF network element receives the first request message sent by AS_T.

For example, after receiving the call signaling, AS_T determines, based on information in the call signaling, for example, an identifier of UE_O or UE_T, that an announcement needs to be played to UE_O (where a reason is that, for example, a user of UE_T has subscribed to an "announcement playing" value-added service, namely, an RBT service), and further determines that a UMF network element that can play an announcement to UE_O is required. Therefore, AS_T may send the first request message to the NRF network element, to request to obtain the UMF network element that can provide an announcement playing service. This is because if the announcement playing service is provided for UE_O or UE_T still by using UMF_T initially selected for UE_T, UMT_T may fail to provide the announcement playing service due to a capability limitation of UMT_T. In other words, the announcement playing service is provided by using UMF_T by default, and a failure of the announcement playing service may be caused. For example, UMF_T in FIG. 4A and FIG. 4B is UMF_1 in FIG. 1. Media plane services that can be provided by UMF_1 include a conference service and a voice recognition service, and cannot support the announcement playing service. If the announcement playing service is provided for UE_O through UMF_T by default, the announcement playing service fails.

Therefore, in this embodiment of this application, AS_T requests, from the NRF network element, a media plane network element that can provide the announcement playing service. The NRF may reselect a media plane network element that can provide the announcement playing service, to reduce failures of the announcement playing service. Specifically, AS_T may send the first request message to the NRF network element, where the first request message is for requesting a media plane network element that can support the announcement playing service required by AS_T, for example, UMF_T_Res in FIG. 2. It may be understood that a specific name of the first request message is not limited in embodiments of this application. For example, the first request message may be a service discovery request message.

It may be understood that, if UMF_T can also provide the announcement playing service, UMF_T may be preferentially selected to provide the announcement playing service. This is because UMF_T has allocated the media endpoints, namely T_called_UE and T_called_NW in a process in which UE_T accesses the network. Therefore, a media transmission channel between UMF_T and UE_O may be established through T_called_NW, and a procedure of requesting to allocate a media endpoint does not need to be triggered again, to reduce a latency of providing the announcement playing service. Therefore, when UMF_T can provide the announcement playing service, the NRF network element may preferentially select UMF_T to provide the announcement playing service, to reduce the latency as much as possible.

Optionally, to enable the NRF network element to preferentially consider UMF_T as a target media plane network element providing the announcement playing service, AS_T may provide the information about UMF_T for the NRF network element, to indicate the NRF network element to preferentially consider UMF_T. For example, the first request message further includes preferred network element information, and the preferred network element information indicates an initially selected media plane network element. For example, the initially selected media plane network element is UMF_T. For example, the preferred network element information may include an ID or an IP address of UMF_T. It should be understood that the call signaling received by AS_T includes the information about UMF_T, and is provided for the NRF network element by using the first request message.

The preferred network element information includes the information about UMF_T. This may also be understood as that the preferred network element information implicitly indicates that UMF_T is used as the target media plane network element when both UMF_T and UMF_T_Res can provide the announcement playing service. In other words, the target media plane network element and UMF_T may be a same network element, or the target media plane network element and UMF_T may be different network elements (where this is used as an example in FIG. 2). In FIG. 4A and FIG. 4B, an example in which the target media plane network element is UMF_T_Res in FIG. 2 is used.

The first request message includes network element requirement information, and the network element requirement information may indicate information about a required media plane service (which corresponds to the second media plane service in content of SUMMARY), for example, information about the announcement playing service. The information about the announcement playing service may include a value indicating that a UMF network element having the announcement playing service is required, to indicate that a UMF network element that can provide the announcement playing service is required. Optionally, the network element requirement information may further indicate information about a required media plane network element. The NRF network element may select, based on the network element requirement information, a suitable media plane network element (referred to as the target media plane network element) for the announcement playing service, for example, UMF_T_Res in FIG. 2. Specifically, the first request message may be an HTTP request message. In an example, the HTTP request message may be as follows:

```
GET/nnrf-disc/v1/nf-instances?requester-nf-type=AS&target-nf-type=UMF
 HTTP/2.0
         host: 10.2.102.10:31070
         content-type: application/json
         content-length: 44
         accept-encoding: gzip
         user-agent: Go-http-client/2.0
         {
               ...
               "PreferedUMF": "UMF-beijing-haidian1", //Preferred network element
 information
               "RequiredUMF": "nnrf-umf-playtone"; //Network element requirement
 information...
         }
```

"PreferedUMF" indicates that an initially selected UMF network element is a preferentially selected UMF network element. For example, a value of "PreferedUMF" may be information about the initially selected UMF network element (for example, UMF_T in this example). For example, the value is "UMF-beijing-haidian1", indicating an initially accessed UMF network element carried in the 180 message. "RequiredUMF" indicates that a media plane network element providing the second media plane service is required. For example, if a value is "playtone", indicating that a UMF network element having a capability of "playing an announcement to calling UE" is required.

S416: The NRF network element sends a first response message to AS_T, and correspondingly, AS_T receives the first response message sent by the NRF network element.

The NRF network element determines, from a plurality of UMF network elements based on the preferred network element information and the network element requirement information, the target media plane network element that can provide the announcement playing service, namely, UMF_T_Res. After determining the target media plane network element, the NRF network element sends the first response message to AS_T, where the first response message may indicate the target media plane network element.

For example, the NRF network element may obtain stored NFS information of each UMF network element, to determine, based on the NFS information of each UMF network element, a UMF network element that can provide the announcement playing service. First, the NRF network element may preferentially obtain capability information of UMF_T based on the preferred network element information, to determine, based on the capability information of UMF_T, whether UMF_T can provide the announcement playing service. If UMF_T can provide the announcement playing service, the NRF network element determines UMF_T as the target media plane network element, in other words, the target media plane network element and UMF_T are a same network element. On the contrary, if UMF_T cannot provide the announcement playing service, the NRF network element obtains stored capability information of another UMF network element, to select a UMF network element that can provide the announcement playing service. In other words, the NRF network element may select a UMF network element that can provide the announcement playing service as the target media plane network element. In this case, the target media plane network element and UMF_T are not a same network element. The NRF network element preferentially considers UMF_T, to reduce the latency of the announcement playing service as much as possible on the premise of reducing failures of the announcement playing service.

With reference to FIG. 2, FIG. 4A, and FIG. 4B, assuming that UMF_T is UMF_1 in FIG. 1, the NRF network element may obtain capability information of UMF_1, and determine that UMF_1 cannot provide the announcement playing service. Subsequently, the NRF network element may obtain capability information of UMF_2 and capability information of UMF_3, to determine that services that can be provided by UMF_2 include a network address translation service, an announcement playing service, and a media processing service, and services that can be provided by UMF_3 include a network address translation service and an announcement playing service. A network function repository network element may determine UMF_2 or UMF_3 as the target media plane network element, namely, UME_T_Res.

It may be understood that, if the target media plane network element and UMF_T are a same network element, the first response message may include the information about UMF_T, for example, the ID or the IP address of UMF_T. Alternatively, the first response message may further include a feedback indication. If the first response message includes the feedback indication, for AS_T, the target media plane network element may be UMF_T by default. Optionally, AS_T receives the first response message, and may store information about UMF_T_Res.

The first response message may be an HTTP response message. In an example, the HTTP response message may be as follows:

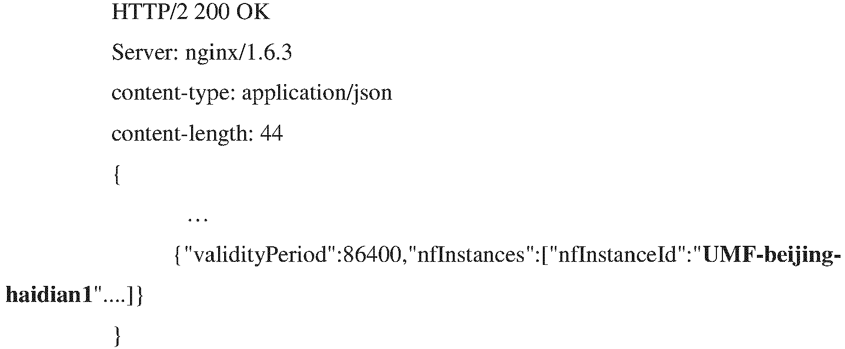

The field "nfInstances" indicates information about a UMF network element (namely, UMF_T_Res) that meets a requirement of the announcement playing service. "nfInstanceId" is a field belonging to the field "nfInstances", indicating a unique ID that identifies a UMF. For example, a value is **"UMF-beijing-haidian1"** (which is consistent with a specified value in the first request message).

S417: AS_T sends a second request message to UMF_T_Res, and correspondingly, UMF_T_Res receives the second request message sent by AS_T.

The second request message may be for requesting UMF_T_Res to allocate a media endpoint (which is, for example, referred to as a target media endpoint). For example, in FIG. 2, the target media endpoint is T_called_media. This may also be understood as that the second request message is for requesting a target media endpoint that provides the announcement playing service, or is for requesting information about a target media endpoint. The information about the target media endpoint may include an IP address and a port number used by UMF_T_Res to provide the announcement playing service. It may be understood that a specific name of the second request message is not limited in embodiments of this application. For example, the second request message may also be referred to as an endpoint allocation request message.

The second request message may include information about a media endpoint that is of UMF_O and that is connected to a UMF network element on the T side. The example in FIG. 2 is still used. For ease of description, the information about the media endpoint that is of UMF_O and that is connected to the UMF network element on the T side is the information about T_caller_NW of UMF_O. For example, the second request message may include SDP information, and the SDP information includes the IP address and the port number of T_caller_NW of UMF_O. After receiving the second request message, UMF_T_Res may allocate the target media endpoint, for example, T_called_media in FIG. 2. Similar to the first request message, the second request message is also HTTP information.

S418: UMF_T_Res sends a second response message to AS_T, and correspondingly, AS_T receives the second response message sent by UMF_T_Res. The second response message may also be referred to as a service discovery response message.

The second response message may indicate the target media endpoint allocated by UMF_T_Res for providing the announcement playing service, namely, T_called_media. For example, the second response message may include information about T_called_media of UMF_T_Res, for example, an IP address and a port number of T_called_media.

AS_T knows the information about T_called_media of UMF_T_Res, and may forward the information about T_called_media to PCSCF_O. For example, AS_T may forward the information about T_called_media to AS_O, and then AS_O forwards the information about T_called_media to PCSCF_O.

S419: AS_T sends a 180 message to AS_O, and correspondingly, AS_O receives the 180 message sent by AS_T.

AS_T receives the second response message, and may create SDP information, to be specific, assign a value of the IP address of T_called_media of UMF_T_Res to an IP address in the SDP information, assign a value of the port number of T_called_media of UMF_T_Res to a port nnumber in the SDP information, and then send a 180 message including the SDP information to AS_O. This may be understood as that AS_T may transmit the IP address of T_called_media to AS_O by using the 180 message. For example, AS_T may send the 180 message carrying the IP address of T_called_media to SCSCF_T, and SCSCF_T forwards the 180 message carrying the IP address of T_called_media to SCSCF_O. SCSCF_O forwards the 180 message carrying the IP address of T_called_media to AS_O.

S420: AS_O sends a 180 message to PCSCF_O, and correspondingly, PCSCF_O receives the 180 message sent by AS_O.

Content carried in the 180 message is the same as that carried in the 180 message in S419, in other words, the 180 message also includes the information about T_called_media of UMF_T_Res.

S421: PCSCF_O indicates, to UMF_O, that T_caller_NW of UMF_O is connected to T_called_media of UMF_T_Res.

S422: PCSCF_O sends a 18x message to UE_O, and correspondingly, UE_O receives the 18x message sent by PCSCF_O.

PCSCF_O may replace the IP address in the SDP information included in the 180 message received from AS_O with the IP address of T_caller_UE, generates a new 18x message, and forwards the 18x message to UE_O. For example, the 18x message may be a 183 message.

S423: T_caller_NW of UMF_O establishes a connection to T_called_media of UMF_T_Res.

It may be understood that, when T_caller_NW is connected to T_called_media, a channel connection between UMF_O and UMF_T_Res can be implemented, so that a channel connection between UE_O and UMF_T_Res is implemented.

S424: T_caller_UE of UMF_O establishes a connection to UE_O.

S425: UE_O and UE_T exchange a PRACK request message/200 message.

The PRACK request message/200 message is carried by two pieces of signaling, where one piece of signaling carries the PRACK request message, and the other piece of signaling carries the 200 message. The 200 message may be considered as a response message of the PRACK request message. UE_O and UE_T exchange the PRACK request message/200 message, indicating that the connection has been established between T_caller_NW of UMF_O and T_called_media of UMF_T_Res. After receiving the 18x message from PCSCF_O, UE_O may send the PRACK request message/200 message to PCSCF_O, and PCSCF_O sends the PRACK request message/200 message to AS_O. After receiving the PRACK request message/200 message, AS_O sends the PRACK request message/200 message to AS_T. After receiving the PRACK request message/200 message, AS_T determines that the connection has been established between T_caller_NW of UMF_O and T_called_media of UMF_T_Res.

S426: AS_T indicates UMF_T_Res to play an announcement to UE_O.

For example, in response to determining that the connection has been established between T_caller_NW of UMF_O and T_called_media of UMF_T_Res, AS_T may send indication information to UMF_T_Res, where the indication information may indicate UMF_T_Res to provide the announcement playing service. Alternatively, this may be understood as that the indication information may indicate UMF_T_Res to start to play the announcement. The indication information may include the information about T_called_media of UMF_T_Res, to indicate T_called_media to play the announcement to UE_O.

S427: UMF_T_Res sends an audio stream to UE_O.

After receiving the indication information, UMF_T_Res sends the audio stream to UE_O. Although UMF_T cannot provide the announcement playing service for UE_O, UMF_T_Res can provide the announcement playing service. Therefore, the failures of the announcement playing service can be reduced.

An example in which the procedure shown in FIG. 4A and FIG. 4B is applied to the architecture shown in FIG. 2 is used, in other words, an example in which UMF_T and UMF_T_Res are not a same network element is used in the procedure shown in FIG. 4A and FIG. 4B. If UMF_T can provide the announcement playing service for UE_O, UMF_T is the target media plane network element, as shown in FIG. 3. To better understand the solutions provided in embodiments of this application, the architecture shown in FIG. 3 is used below as an example to describe the solutions provided in embodiments of this application.

The solutions provided in embodiments of this application in the architecture shown in FIG. 3 are described below. In other words, the UMF network element that provides the announcement playing service for UE_T and the UMF network element initially selected for UE_T are not a same network element. For example, in FIG. 3, the UMF network element initially selected for UE_T is UMF_T, and the UMF network element that provides the announcement playing service for UE_O is also UMF_T. Correspondingly, the UMF network element initially selected for UE_O is UMF_O.

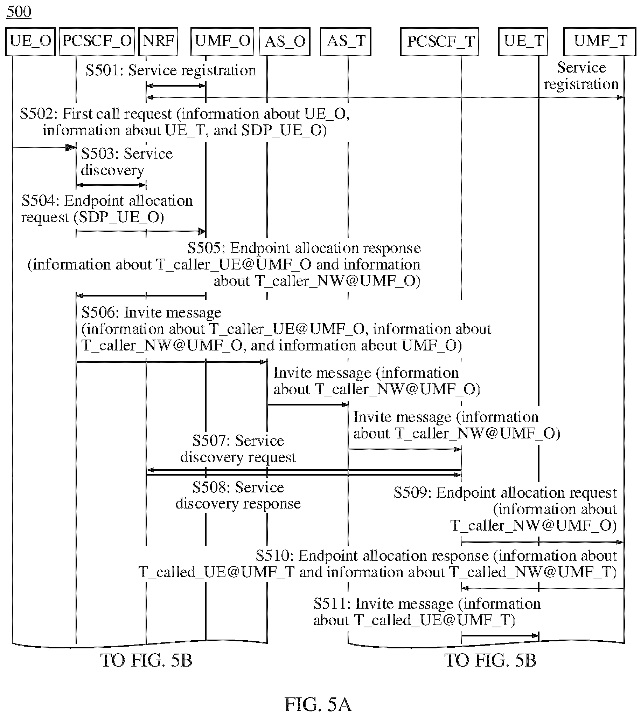

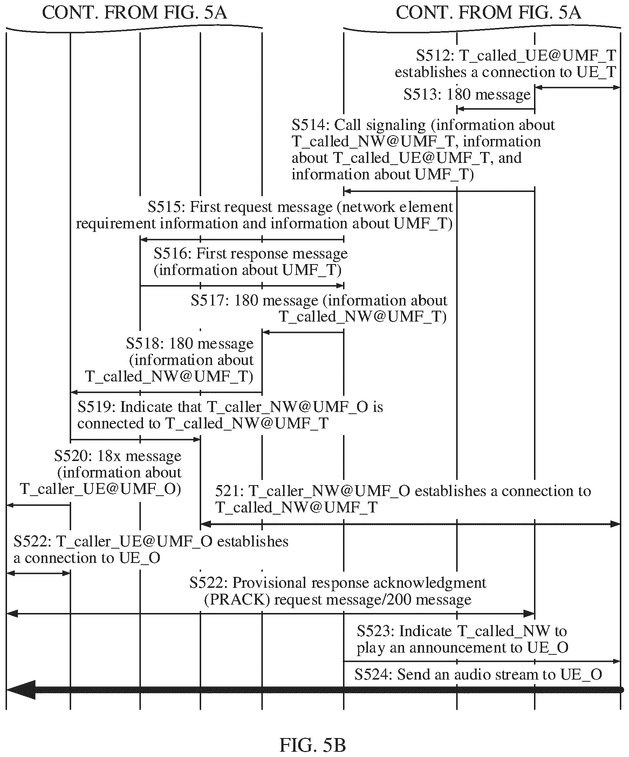

FIG. 5A and FIG. 5B are schematic flowcharts of a communication method 500 according to an embodiment of this application. The architecture shown in FIG. 3 is used as an example in FIG. 5A and FIG. 5B. FIG. 5A and FIG. 5B differ from FIG. 4A and FIG. 4B in that UMF_T is both a first media plane network element and a target media plane network element. In FIG. 5A and FIG. 5B, T_caller_UE@UMF_O refers to a media endpoint T_caller_UE of UMF_O. Similarly, T_caller_NW@UMF_O refers to a media endpoint T_caller_NW of UMF_O. T_called_UE@UMF_T refers to a media endpoint T_called_UE of UMF_T. T_called_UE@UMF_T refers to a media endpoint T_called_UE of UMF_T. T_called_media@UMF_T_Res refers to a media endpoint T_called_media of UMF_T_Res. UMF_T in FIG. 5A and FIG. 5B refers to both the first media plane network element and the target media plane network element in this embodiment of this application. AS_T refers to a first control network element, and PCSCF_O refers to a second control plane network element. In the embodiment shown in FIG. 5A and FIG. 5B, an announcement playing service refers to a second media plane service in this embodiment of this application. Correspondingly, a service for UE_T to access a network refers to a first media plane service, in other words, an access service. In FIG. 5A and FIG. 5B, a thin line indicates that signaling is exchanged, and a thick line indicates that media streams are exchanged.

S501: UMF_O initiates service registration with an NRF network element.

S502: UE_O sends a first call request to PCSCF_O, and correspondingly, PCSCF_O receives the first call request sent by UE_O.

S503: PCSCF_O initiates a service discovery request to the NRF network element, where the service discovery request is for requesting information about a UMF that provides an access service for UE_O.

S504: PCSCF_O sends an endpoint allocation request to UMF_O, and correspondingly, UMF_O receives the endpoint allocation request sent by PCSCF_O.

S505: UMF_O sends an endpoint allocation response to PCSCF_O, and correspondingly, PCSCF_O receives the endpoint allocation response sent by UMF_O.

S506: PCSCF_O sends an invite message, and PCSCF_T receives the invite message.

S507: PCSCF_T sends a service discovery request to the NRF network element, and correspondingly, the NRF network element receives the service discovery request sent by PCSCF_T, where the service discovery request is for obtaining information about a UMF network element having a required access capability.

S508: The NRF network element sends a service discovery response to PCSCF_T, and correspondingly, PCSCF_T receives the service discovery response sent by the NRF network element, where the service discovery response indicates the UMF network element having the required access capability. For example, the service discovery response includes information about UMF_T.

S509: PCSCF_T sends an endpoint allocation request to UMF_T, and correspondingly, UMF_T receives the endpoint allocation request sent by PCSCF_T.

S510: UMF_T sends an endpoint allocation response to PCSCF_T, and correspondingly, PCSCF_T receives the endpoint allocation response sent by UMF_T.

S511: PCSCF_T sends an invite message to UE_T, and correspondingly, UE_T receives the invite message sent by PCSCF_T.

S512: UE_T establishes a connection to T_called_UE of UMF_T.

After receiving the invite message, UE_T determines based on SDP information in the invite message, that an endpoint that is of UMF_T and that is connected to the UE_T is T_called_UE, and establishes a connection to T_called_UE of UMF_T.

S513: UE_T sends a 180 message to PCSCF_T, and correspondingly, PCSCF_T receives the 180 message sent by UE_T.

S514: AS_T receives call signaling. Similar to S414, the call signaling carries information about T_called_UE of UMF_T and information about T_called_NW of UMF_T.

For specific implementations of S501 to S514, refer to related content of S401 to S414 in FIG. 4A and FIG. 4B. Details are not described herein again.

S515: AS_T sends a first request message to the NRF network element, and correspondingly, the NRF network element receives the first request message sent by AS_T. The first request message includes a network element requirement and preferred network element information (namely, the information about UMF_T).

S516: The NRF network element sends a first response message to AS_T, and correspondingly, AS_T receives the first response message sent by the NRF network element.

In this embodiment of this application, the NRF network element obtains, based on the preferred network element information (namely, the information about UMF_T), capability information of UMF_T. If the NRF network element determines, based on the capability information of UMF_T, that UMF_T can provide an announcement playing service, the NRF network element determines UMF_T as a target media plane network element. Because no additional connection establishment process is required, a latency of the announcement playing service can be reduced.

Correspondingly, the first response message may indicate UMF_T. For example, the first response message includes the information about UMF_T, for example, an IP address and an ID of UMF_T. Alternatively, the first response message may include a feedback indication. If the first response message includes the feedback indication, for AS_T, the target media plane network element may be UMF_T by default. For a specific implementation, refer to related content of S416. Details are not described herein again.

S517: AS_T sends a 180 message to AS_O, and correspondingly, AS_O receives the 180 message sent by AS_T.

Because AS_T has known the information about T_called_NW of UMF_T based on the call signaling in S514, AS_T may forward the information about T_called_NW to AS_O. For example, AS_T may create SDP information, to be specific, assign a value of an IP address of T_called_NW of UMF_T to an IP address in the SDP information, assign a value of a port of T_called_NW of UMF_T to a port in the SDP information, and then forward a 180 message including the SDP information to AS_O; and then AS_O forwards the information about T_called_NW to PCSCF_O. In FIG. 5A and FIG. 5B, T_called_NW of UMF_T is a target media endpoint of UMF_T in this embodiment of this application. This may also be understood as that AS_T may transmit the IP address of T_called_NW to AS_O by using the 180 message. For example, AS_T may send the 180 message carrying the IP address of T_called_NW to SCSCF_T, and SCSCF_T forwards the 180 message carrying the IP address of T_called_NW to SCSCF_O. SCSCF_O forwards the 180 message carrying the IP address of T_called_NW to AS_O.

S518: AS_O sends a 180 message to PCSCF_O, and correspondingly, PCSCF_O receives the 180 message sent by AS_O.

Content carried in the 180 message is the same as that carried in the 180 message in S517, in other words, the 180 message also includes the information about T_called_NW of UMF_T.

S519: PCSCF_O indicates, to UMF_O, that T_caller_NW of UMF_O is connected to T_called_NW of UMF_T.

S520: PCSCF_O sends a 18x message to UE_O, and correspondingly, UE_O receives the 18x message sent by PCSCF_O. PCSCF_O may replace the IP address in the SDP information included in the 180 message received from AS_O with an IP address of T_caller_UE, generates a new 18x message, and forwards the 18x message to UE_O. For example, the 18x message may be a 183 message.

S521: T_caller_NW of UMF_O establishes a connection to T_called_NW of UMF_T.

It may be understood that, when T_caller_NW is connected to T_called_NW, a channel connection between UMF_O and UMF_T can be implemented, so that a channel connection between UE_O and UMF_T is implemented.

S522: UE_O and UE_T exchange a PRACK request message/200 message.

Based on the PRACK request message/200 message, AS_T determines that the connection has been established between T_caller_NW of UMF_O and T_called_NW of UMF_T.

S523: AS_T indicates UMF_T to play an announcement to UE_O.

In response to determining that the connection has been established between T_caller_NW of UMF_O and T_called_NW of UMF_T, AS_T may send indication information to UMF_T, where the indication information may indicate UMF_T to provide the announcement playing service. Alternatively, this may be understood as that the indication information may indicate UMF_T to start to play the announcement. The indication information may include information about T_called_media of UMF_T, to indicate T_called_NW to play the announcement.

S524: UMF_T sends an audio stream to UE_O.

After receiving the indication information, UMF_T sends the audio stream to UE_O. Because UMF_T can provide the announcement playing service, the latency of the announcement playing service can be further reduced when failures of the announcement playing service are reduced.

In FIG. 4A, FIG. 4B, FIG. 5A, and FIG. 5B, an example in which UMF_T provides the announcement playing service for UE_O is used. In a possible application scenario, UMF_T may alternatively provide a media plane service for UE_T. For example, UMF_T plays a prompt tone for UE_T. For example, if UE_T is in arrears, UMF_T may play a prompt tone indicating that UE_T is in arrears in a call process of UE_T. In the process, calling UE and called UE are not distinguished.

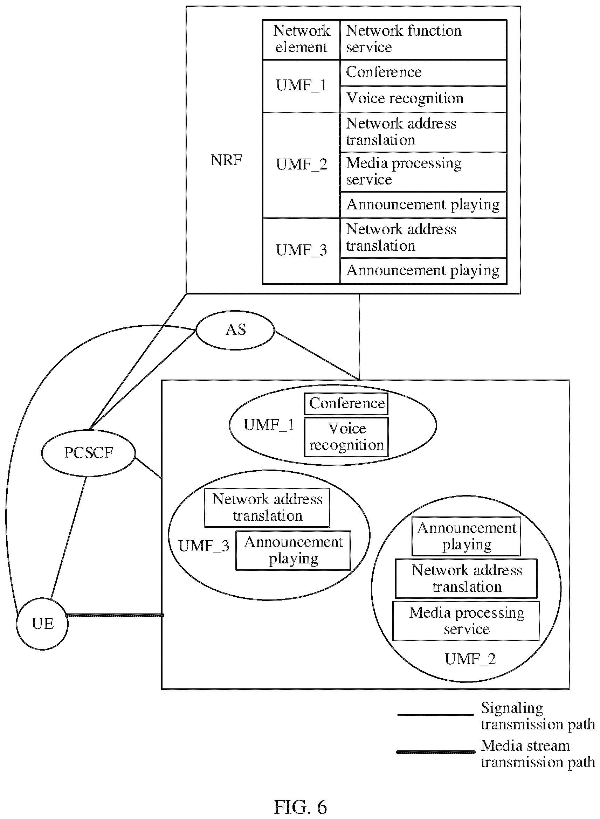

The following describes a procedure in which a network plays a prompt tone for UE. The process is applicable to an architecture shown in FIG. 6. For ease of description, an example in which the network provides an announcement playing service for the UE is used for description below.

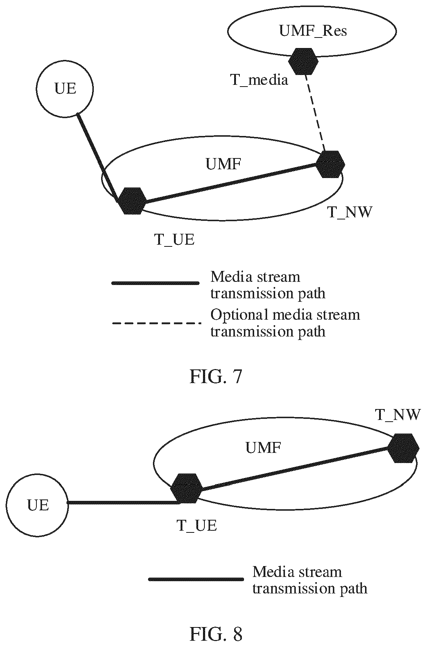

FIG. 6 is a diagram of another network architecture to which an embodiment of this application is applicable. For FIG. 6, refer to related content in FIG. 1. Details are not described herein again. It may be understood that, similar to FIG. 2 and FIG. 3, in the architecture shown in FIG. 6, a UMF network element that provides an announcement playing service for the UE may be a UMF network element different from an initially selected UMF network element, for example, UMF_Res, as shown in FIG. 7. The UMF network element that provides the announcement playing service for the UE may alternatively be the initially selected UMF network element, as shown in FIG. 8. For ease of description, the UMF network element that provides the announcement playing service for the UE is referred to as a target UMF network element below. The following separately describes the technical solutions provided in embodiments of this application by using architectures shown in FIG. 7 and FIG. 8 as examples.

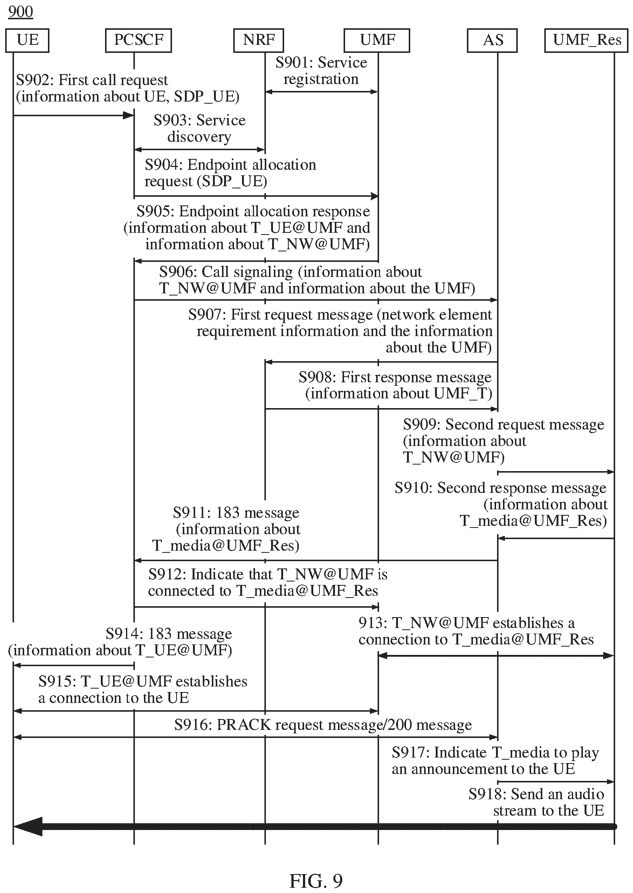

FIG. 9 is a schematic flowchart of a communication method 900 according to an embodiment of this application. An example in which the procedure shown in FIG. 9 is applied to the architecture shown in FIG. 7 is used. A UMF network element in FIG. 9 is a UMF network element initially selected by a corresponding control plane network element in a process in which UE joins a call session, T_UE refers to a media endpoint that is of the UMF network element and that is connected to UE, and T_NW refers to a media endpoint that is of the UMF network element and that is connected to another UMF network element. UMF_Res is a UMF network element that can provide an announcement playing service. The UMF network element refers to a first media plane network element in this embodiment of this application, UMF_Res refers to a target media plane network element in this embodiment of this application, an AS refers to a first control plane network element in this embodiment of this application, and PCSCF refers to a second control plane network element. In FIG. 9, T_UE@UMF refers to a media endpoint T_UE of the UMF network element, and T_NW@UMF refers to a media endpoint T_NW of the UMF network element. T_media@UMF_Res refers to a media endpoint T_media of UMF_Res. In FIG. 9, a thin line indicates that signaling is exchanged, and a thick line indicates that media streams are exchanged. Similarities between the procedure shown in FIG. 9 and the procedure shown in FIG. 4A and FIG. 4B are not described below.

S901: The UMF network element initiates service registration with an NRF network element.

S902: The UE sends a first call request to the PCSCF network element, and correspondingly, the PCSCF network element receives the first call request sent by the UE.

S903: The PCSCF network element initiates a service discovery request to the NRF network element, where the service discovery request is for requesting information about a UMF that provides an access service for the UE.

S904: The PCSCF network element sends an endpoint allocation request to the UMF, and correspondingly, the UMF network element receives the endpoint allocation request sent by the PCSCF network element.

S905: The UMF network element sends an endpoint allocation response to the PCSCF, and correspondingly, the PCSCF network element receives the endpoint allocation response sent by the UMF network element.

For specific implementations of S901 to S905, refer to related content of S401 to S405 in FIG. 4A. For example, UE_O in FIG. 4A and FIG. 4B is replaced with the UE, and PCSCF_O is replaced with the PCSCF network element. Details are not described herein again.

S906: The AS receives call signaling.

Similar to S414, a difference lies in that, the call signaling may include information about the UMF, and information about a media endpoint that is of the UMF and that is connected to another UMF, namely, information about T_NW@UMF. For a specific implementation of S906, refer to related content of S414. Details are not described herein again.

S907: The AS sends a first request message to the NRF network element, and correspondingly, the NRF network element receives the first request message sent by the AS.

This step is similar to S415, and a difference lies in that the first request message includes network element requirement information and the information about the UMF network element. For a specific implementation of S907, refer to related content of S415. Details are not described herein again.

S908: The NRF network element sends a first response message to the AS, and correspondingly, the AS receives the first response message sent by the NRF network element.

The first response message includes information about UMF_Res, to indicate that the UMF network element that can provide the announcement playing service is UMF_Res. For a specific implementation of S908, refer to related content of S416. Details are not described herein again.

S909: The AS sends a second request message to UMF_Res, and correspondingly, UMF_Res receives the second request message sent by the AS.

This step is similar to S417, and a difference lies in that the second request message includes information about T_NW of the UMF network element. For a specific implementation of S909, refer to related content of S417. Details are not described herein again.

S910: UMF_Res sends a second response message to the AS, and correspondingly, the AS receives the second response message sent by UMF_Res.

The second response message may indicate a target media endpoint allocated by UMF_Res for providing the announcement playing service, namely, T_media. For example, the second response message may include information about T_media of UMF_Res, for example, an IP address and a port number of T_media.

S911: The AS sends a 183 message to the PCSCF, and correspondingly, the PCSCF receives the 183 message sent by the AS. The 183 message includes the information about T_media of UMF_Res. After receiving the second response message, the AS may create SDP information, for example, give an IP address in the SDP information a value of the IP address of T_media of UMF_Res, give a port number in the SDP information a value of the port number of T_media of UMF_Res, and then send a 183 message including the SDP information to the PCSCF.

S912: The PCSCF network element indicates, to the UMF network element, that T_NW of the UMF network element is connected to T_media of UMF_Res.

S913: T_NW of the UMF network element establishes a connection to T_media of UMF_Res.

S914: The PCSCF network element sends a 183 message to the UE, and correspondingly, the UE receives the 183 message sent by the PCSCF.

After receiving the 183 message from the AS, the PCSCF network element may replace the IP address in the SDP information with an IP address of T_UE of the UMF, replace a port in the SDP information with a port of T_UE of the UMF, and then forward the 183 message to the UE.

S915: T_UE of the UMF network element establishes a connection to the UE.

S916: The UE sends a PRACK request message/200 message.

The AS determines, based on the PRACK request message/200 message, that a connection has been established between T_NW of the UMF and T_media of UMF_Res.

S917: The AS indicates UMF_Res to play an announcement to the UE.

In response to determining that the connection has been established between T_NW of the UMF and T_media of UMF_Res, the AS may send indication information to UMF_Res, where the indication information may indicate UMF_Res to provide an announcement playing service. Alternatively, it may be understood as that the indication information may indicate UMF_Res to start to play the announcement. The indication information may include the information about T_media of UMF_Res, to indicate T_media to play an announcement to the UE.

S918: UMF_Res sends an audio stream to the UE.

After receiving the indication information, UMF_Res sends the audio stream to the UE. UMF_Res can provide the announcement playing service. Therefore, failures of the announcement playing service can be reduced.

An example in which the procedure shown in FIG. 9 is applied to the architecture shown in FIG. 7 is used, in other words, an example in which UMF_T and UMF_Res are not a same network element is used in the procedure shown in FIG. 9. If UMF_T can provide an announcement playing service, UMF_T is a target media plane network element, as shown in FIG. 8. To better understand the solutions provided in embodiments of this application, the architecture shown in FIG. 8 is used below as an example to describe the solutions provided in embodiments of this application.

The solutions provided in embodiments of this application in the architecture shown in FIG. 8 are described below. In other words, a UMF network element that provides an announcement playing service for UE and a UMF network element initially selected for the UE are not a same network element. For example, in FIG. 8, the UMF network element initially selected for the UE is the UMF network element in FIG. 8, and the UMF network element that provides the announcement playing service for the UE is also the UMF in FIG. 8.

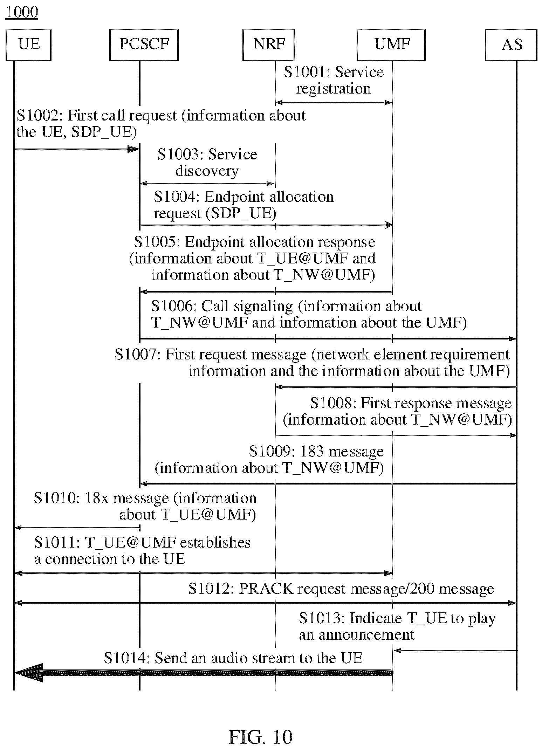

FIG. 10 is a schematic flowchart of a communication method 1000 according to an embodiment of this application. The architecture shown in FIG. 8 is used as an example in FIG. 10. In FIG. 10, T_UE refers to a media endpoint that is of a UMF network element and that is connected to UE, and T_NW refers to a media endpoint that is of the UMF network element and that is connected to another UMF network element. The UMF network element is a UMF network element initially selected by a corresponding control plane network element in a process in which the UE joins a call session. In addition, the UMF network element can also provide an announcement playing service. In other words, the UMF network element not only refers to a first media plane network element, but also refers to a target media plane network element in this embodiment of this application, an AS refers to a first control plane network element in this embodiment of this application, and PCSCF refers to a second control plane network element. In FIG. 10, information about T_UE@UMF refers to a media endpoint T_UE of the UMF network element, and T_NW@UMF refers to a media endpoint T_NW of the UMF network element. Similarities between the procedure shown in FIG. 10 and the procedure shown in FIG. 9 are not described below. In FIG. 10, a thin line indicates that signaling is exchanged, and a thick line indicates that media streams are exchanged.

S1001: The UMF network element initiates service registration with an NRF network element.

S1002: The UE sends a first call request to a PCSCF network element, and correspondingly, the PCSCF receives the first call request sent by the UE.

S1003: The PCSCF network element initiates a service discovery request to the NRF network element, where the service discovery request is for requesting information about a UMF network element that provides an access service for the UE.

S1004: The PCSCF network element sends an endpoint allocation request to the UMF, and correspondingly, the UMF network element receives the endpoint allocation request sent by the PCSCF network element.

S1005: The UMF network element sends an endpoint allocation response to the PCSCF network element, and correspondingly, the PCSCF network element receives the endpoint allocation response sent by the UMF network element.

For specific implementations of S1001 to S1005, refer to related content of S401 to S405 in FIG. 4A. For example, UE_O in FIG. 4A and FIG. 4B is replaced with the UE, and PCSCF_O is replaced with the PCSCF network element. Details are not described herein again.

S1006: The AS receives call signaling.

Similar to S414, a difference lies in that, the call signaling may include information about the UMF network element, and information about a media endpoint that is of the UMF network element and that is connected to another UMF network element, namely, information about T_NW@UMF. For a specific implementation of S1006, refer to related content of S414. Details are not described herein again.

S1007: The AS sends a first request message to the NRF network element, and correspondingly, the NRF network element receives the first request message sent by the AS.

For a specific implementation of S1007, refer to related content of S907. Details are not described herein again.

S1008: The NRF network element sends a first response message to the AS, and correspondingly, the AS receives the first response message sent by the NRF network element.

The first response message includes the information about the UMF network element, to indicate that a UMF network element that can provide an announcement playing service is the UMF network element indicated by the first response message. For a specific implementation of S1009, refer to related content of S416. Details are not described herein again.

S1009: The AS sends a 183 message to the PCSCF network element, and correspondingly, the PCSCF network element receives the 183 message sent by the AS.

After receiving the first response message, the AS may create SDP information, for example, give an IP address in the SDP information a value of an IP address of T_NW of the UMF network element, give a port number in the SDP information a value of a port number of T_NW of the UMF network element, and then send a 183 message including the SDP information to the PCSCF network element. It may be understood that, the AS may obtain the IP address and the port number of T_NW of the UMF network element from the received call signaling.

S1010: The PCSCF sends a 18x message to the UE, and correspondingly, the UE receives the 18x message sent by the PCSCF.

The 18x message may be a 183 message. After receiving the 183 message from the AS, the PCSCF may replace the IP address in the SDP information to an IP address of T_UE of the UMF network element, replace a port in the SDP information to a port of T_UE of the UMF network element, and then forward the 183 message to the UE.

It may be understood that the PCSCF may determine the IP address in the received SDP information. If the PCSCF determines that the IP address in the received SDP information is the IP address of T_NW of the UMF network element, and the port in the SDP information is the port number of T_NW of the UMF network element, the PCSCF does not send, to the UMF network element, a message indicating T_NW to establish a connection.

S1011: T_UE of the UMF network element establishes a connection to the UE.

S1012: The UE sends a PRACK request message/200 message.

S1013. The AS indicates T_UE to play an announcement.

The AS may send indication information to the UMF network element, where the indication information may indicate the UMF network element to provide an announcement playing service. Alternatively, it may be understood as that the indication information may indicate the UMF network element to start to play an announcement. The indication information may include information about T_UE of the UMF network element, to indicate T_UE to play the announcement.

S1014: The UMF network element sends an audio stream to the UE.

After receiving the indication information, the UMF network element sends the audio stream to the UE. The UMF network element can provide the announcement playing service. Therefore, failures of the announcement playing service can be reduced.

In this embodiment of this application, the AS provides, for the NRF network element, information about an initially selected UMF network element and a required media plane service, so that the NRF network element re-determines a UMF network element that can provide a media plane service required by the AS. If the initially selected UMF network element cannot provide the media plane services required by the AS, the NRF network element selects another UMF network element to provide the media plane services required by the AS, to reduce failures of the media plane service. If the initially selected UMF network element can provide the media plane service required by the AS, the NRF network element determines to continue to provide the required media plane service for the AS by using the initially selected UMF network element, to reduce a latency of the media plane service.

In embodiments provided in this application, the methods provided in embodiments of this application are respectively described from a perspective of interaction between terminal devices, control plane network elements, or media plane network elements. To implement functions in the methods provided in the foregoing embodiments of this application, the terminal device, the control plane network element, and the media plane network element may each include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

Based on a same concept as the method embodiments, an embodiment of this application provides a communication apparatus. The following describes, with reference to the accompanying drawings, communication apparatuses configured to implement the foregoing methods in embodiments of this application.

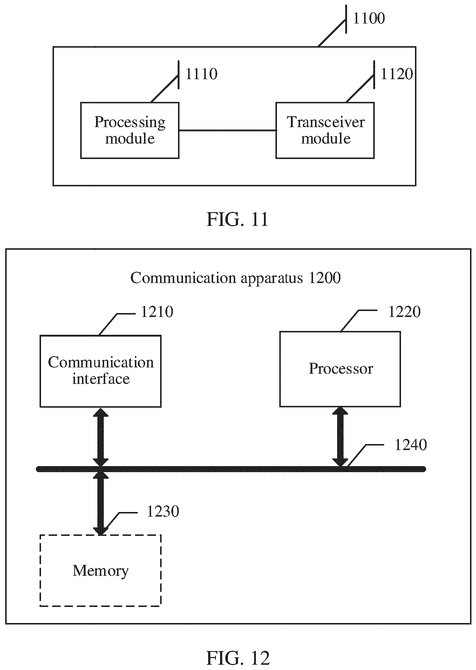

FIG. 11 is a schematic block diagram of a communication apparatus 1100 according to an embodiment of this application. The communication apparatus 1100 may include a processing module 1110 and a transceiver module 1120. Optionally, a storage unit may further be included. The storage unit may be configured to store instructions (code or a program) and/or data. The processing module 1110 and the transceiver module 1120 may be coupled to the storage unit. For example, the processing module 1110 may read the instructions (the code or the program) and/or the data in the storage unit, to implement a corresponding method. The foregoing modules may be disposed independently, or may be partially or completely integrated.

In some possible implementations, the communication apparatus 1100 can correspondingly implement behavior and functions of the first control plane network element in the foregoing method embodiments. The communication apparatus 1100 may be the first control plane network element, may be a component (for example, a chip or a circuit) used in the first control plane network element, or may be a chip, a chip group, or a part of a chip that is configured to perform a related method function in the first control plane network element.

For example, the communication apparatus 1100 implements the method performed by the first control plane network element in the embodiment in at least one of FIG. 4A, FIG. 4B, FIG. 5A, FIG. 5B, FIG. 9, and FIG. 10. The transceiver module 1120 is configured to perform operations related to receiving and sending a message by the first control plane network element, for example, receive call signaling associated with a call service, send network element requirement information and preferred network element information to a network function repository network element based on the call signaling, and receive information about a target media plane network element from the network function repository network element. The call signaling includes information about a first media plane network element, and the first media plane network element is configured to provide a first media plane service associated with the call service. The network element requirement information indicates the network function repository network element to provide information about a media plane network element that can provide a second media plane service associated with the call service. The preferred network element information indicates that the first media plane network element is a preferred media plane network element. The target media plane network element is configured to provide the second media plane service. The processing module 1110 is configured to perform an operation of the first control plane network element other than receiving and sending the message, for example, determining the network element requirement information and the preferred network element information.

In an optional implementation, that the preferred network element information indicates that the first media plane network element is the preferred media plane network element includes: The preferred network element information indicates to use the first media plane network element as a target media plane network element when the network function repository network element determines that the first media plane network element can provide the second media plane service.

In an optional implementation, that the first control plane network element sends the network element requirement information and the preferred network element information to the network function repository network element includes: The first control plane network element sends a service discovery request message to the network function repository network element, where the service discovery request message includes the network element requirement information and the preferred network element information.

In an optional implementation, the first media plane service is an access service or an interworking service, and the second media plane service is a resource service.

In an optional implementation, the processing module 1110 is further configured to obtain target media endpoint information of the target media plane network element, where the target media endpoint information includes information about a target media endpoint that is of the target media plane network element and that is configured to provide the second media plane service. The transceiver module 1120 is further configured to send the target media endpoint information to a second control plane network element, where the second control plane network element is a control plane network element that provides the access service or the interworking service for a calling terminal device or a called terminal device of the call service.

In an optional implementation, the target media endpoint information includes an IP address and a port number of the target media endpoint.

In an optional implementation, the target media plane network element is a second media plane network element, and the transceiver module 1120 is further configured to: send an endpoint allocation request to the target media plane network element, and receive an endpoint allocation response sent by the target media plane network element. The endpoint allocation request is for requesting the target media endpoint information, and the endpoint allocation response includes the target media endpoint information of the target media plane network element.

In an optional implementation, the target media plane network element is the first media plane network element, and the processing module 1110 is further configured to obtain the target media endpoint information from the call signaling.

In an optional implementation, the call signaling further includes the target media endpoint information.

In an optional implementation, the transceiver module 1120 is further configured to request the target media plane network element to provide the second media plane service.

In an optional implementation, the transceiver module 1120 is specifically configured to send indication information to the target media plane network element, where the indication information indicates the target media plane network element to provide the second media plane service through the target media endpoint. For example, the indication information includes the target media endpoint information of the target media plane network element.

In an optional implementation, the communication apparatus 1100 is an application server that provides an application service for a local end, or a serving-call control network element.

In an optional implementation, the second control plane network element is an interrogating-call session control network element or a proxy-call session control network element that provides an access service for a local end or a peer end.

In some other possible implementations, the communication apparatus 1100 can correspondingly implement behavior and functions of the network function repository network element in the foregoing method embodiments. The communication apparatus 1100 may be the network function repository network element, may be a component (for example, a chip or a circuit) used in the network function repository network element, or may be a chip, a chip group, or a part of a chip that is configured to perform a related method function in the network function repository network element.

For example, the communication apparatus 1100 implements the method performed by the network function repository network element in the embodiment in at least one of FIG. 4A and FIG. 4B, FIG. 5A and FIG. 5B, FIG. 9, and FIG. 10. The transceiver module 1120 is configured to perform operations related to receiving and sending a message by the network function repository network element, for example, receive network element requirement information and preferred network element information that are sent by a first control plane network element, and send information about a target media plane network element to the first control plane network element. The network element requirement information indicates the network function repository network element to provide information about a media plane network element that can provide a second media plane service associated with a call service requested by a terminal device. The preferred network element information indicates that the first media plane network element is a preferred media plane network element. The first media plane network element is configured to provide a first media plane service associated with the call service. The target media plane network element is configured to provide the second media plane service. The processing module 1110 is configured to perform an operation of the network function repository network element other than receiving and sending a message, for example, determine, based on the network element requirement information and the preferred network element information, the target media plane network element that can provide the second media plane service for the call service.

In an optional implementation, that the preferred network element information indicates that the first media plane network element is the preferred media plane network element includes: The preferred network element information indicates to use the first media plane network element as the target media plane network element when the network function repository network element determines that the first media plane network element can provide the second media plane service.

In an optional implementation, that the network function repository network element receives the network element requirement information and the preferred network element information that are sent by the first control plane network element includes: The network function repository network element receives a service discovery request message sent by the first control plane network element, where the service discovery request message includes the network element requirement information and the preferred network element information.

In an optional implementation, the first media plane service includes an access service or an interworking service, and the second media plane service includes a resource service.

In an optional implementation, the processing module 1110 is further configured to: determine whether the first media plane network element can provide the second media plane service; and if determining that the first media plane network element can provide the second media plane service, determine to use the first media plane network element as a second media plane network element; or if determining that the first media plane network element cannot provide the second media plane service, select a media plane network element that can support the second media plane service as a second media plane network element.

In an optional implementation, the processing module 1110 is specifically configured to: obtain capability information of the first media plane network element, and determine, based on the capability information, whether the first media plane network element can provide the second media plane service. The capability information indicates a service that can be provided by the first media plane network element.

It should be understood that the processing module 1110 in this embodiment of this application may be implemented by a processor or a processor-related circuit component, and the transceiver module 1120 may be implemented by a transceiver, a transceiver-related circuit component, or a communication interface.

FIG. 12 is a schematic block diagram of a communication apparatus 1200 according to an embodiment of this application. The communication apparatus 1200 may be a terminal device, and can implement a function of the first control plane network element in the methods provided in embodiments of this application. Alternatively, the communication apparatus 1200 may be an apparatus that can support the first control plane network element in implementing a corresponding function in the methods provided in embodiments of this application. The communication apparatus 1200 may be a chip system. In this embodiment of this application, the chip system may include a chip, or may include a chip and another discrete component. For a specific function, refer to the descriptions in the foregoing method embodiments. Alternatively, the communication apparatus 1200 may be a network function repository network element, and can implement a function of the network function repository network element in the methods provided in embodiments of this application. Alternatively, the communication apparatus 1200 may be an apparatus that can support the network function repository network element in implementing a corresponding function in the methods provided in embodiments of this application. The communication apparatus 1200 may be a chip system. In this embodiment of this application, the chip system may include a chip, or may include a chip and another discrete component. For a specific function, refer to the descriptions in the foregoing method embodiments.

The communication apparatus 1200 includes one or more processors 1220, and may be configured to implement or support the communication apparatus 1200 in implementing a function of the first control plane network element in the methods provided in embodiments of this application. For details, refer to the detailed descriptions in the method examples. Details are not described herein again. The one or more processors 1220 may alternatively be configured to implement or support the communication apparatus 1200 in implementing a function of the network function repository network element in the methods provided in embodiments of this application. For details, refer to the detailed descriptions in the method examples. Details are not described herein again. The processor 1220 may also be referred to as a processing unit or a processing module, and may implement a specific control function. The processor 1220 may be a general-purpose processor, a dedicated processor, or the like. For example, the processor includes a central processing unit, an application processor, a modem processor, a graphics processor, an image signal processor, a digital signal processor, a video codec processor, a controller, a memory, and/or a neural network processor. The central processing unit may be configured to control the communication apparatus 1200, execute a software program, and/or process data. Different processors may be independent components, or may be integrated into one or more processors, for example, integrated into one or more application-specific integrated circuits.

Optionally, the communication apparatus 1200 includes one or more memories 1230, configured to store program instructions and/or data. The memory 1230 is coupled to the processor 1220. The coupling in this embodiment of this application may be an indirect coupling or a communication connection between apparatuses, units, or modules in an electrical form, a mechanical form, or another form, and is used for information exchange between the apparatuses, the units, or the modules. The processor 1220 may cooperate with the memory 1230. The processor 1220 may execute the program instructions and/or the data stored in the memory 1230, to enable the communication apparatus 1200 to implement a corresponding method. At least one of the at least one memory may be included in the processor 1220.

The communication apparatus 1200 may further include a communication interface 1210, and is configured to communicate with another device or communication network, such as a radio access network (radio access network, RAN), a wireless local area network (wireless local area network, WLAN), or a wired access network by using any apparatus such as a transceiver. The communication interface 1210 is configured to communicate with another device by using a transmission medium, so that an apparatus in the communication apparatus 1200 can communicate with the another device. For example, when the communication apparatus 1200 is a first control plane network element, the another device is a network function repository network element. Alternatively, when the communication apparatus is a network function repository network element, the another device is a first control plane network element. The processor 1220 may send and receive data through the communication interface 1210. The communication interface 1210 may be specifically a transceiver.

A specific connection medium between the communication interface 1210, the processor 1220, and the memory 1230 is not limited in embodiments of this application. In this embodiment of this application, the memory 1230, the processor 1220, and the communication interface 1210 are connected through a bus 1240 in FIG. 12. The bus is represented by a bold line in FIG. 12. A manner of a connection between other components is merely an example for description, and is not limited. The bus may be classified into an address bus, a data bus, a control bus, and the like. For ease of representation, only one bold line indicates the bus in FIG. 12, but this does not mean that there is only one bus or only one type of bus.

In this embodiment of this application, the processor 1220 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module.

The memory 1230 may be a ROM or another type of static storage device that can store static information and instructions, a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other optical disk storage and optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that is accessible by a computer, but is not limited thereto. The memory may exist independently, and is connected to the processor by using the communication bus 1240. The memory may alternatively be integrated with the processor.

The memory 1230 is configured to store computer-executable instructions for performing the solutions in this application, and the processor 1220 controls execution. The processor 1220 is configured to execute the computer-executable instruction stored in the memory 1230, to implement the communication methods provided in the foregoing embodiments of this application.

Optionally, the computer-executable instructions in this embodiment of this application may also be referred to as application program code. This is not specifically limited in this embodiment of this application.

It may be understood that the communication apparatus in the foregoing embodiments may be a control plane network element (or a network function repository network element), may be a circuit, or may be a chip applied to a control plane network element (or a network function repository network element), or may be another combined component or component having the control plane network element (or the network function repository network element), or the like. The processing module may be a processor, for example, a central processing unit (central processing unit, CPU). The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one first control plane network element terminal device, at least one network function repository network element, and at least one media plane network element, or may further include at least one access control plane network element and/or an interworking control plane network element. For example, the communication system includes a first control plane network element, a network function repository network element, and a media plane network element that are configured to implement related functions in any one or more of FIG. 4A and FIG. 4B, FIG. 5A and FIG. 5B, FIG. 9, and FIG. 10. For details, refer to the related descriptions in the method embodiments. Details are not described herein again.

An embodiment of this application further provides a computer-readable storage medium, including instructions. When the instructions are run on a computer, the computer is enabled to perform the method performed by the first control plane network element in any one or more of FIG. 4A and FIG. 4B, FIG. 5A and FIG. 5B, FIG. 9, and FIG. 10. Alternatively, when the instructions are run on a computer, the computer is enabled to perform the method performed by the network function repository network element in any one of in FIG. 6 to FIG. 9. An embodiment of this application further provides a computer program product, including instructions. When the instruction are run on a computer, the computer is enabled to perform the method performed by the first control plane network element in any one or more of FIG. 4A and FIG. 4B, FIG. 5A and FIG. 5B, FIG. 9, and FIG. 10. Alternatively, when the instructions are run on a computer, the computer is enabled to perform the method performed by the network function repository network element in any one or more of FIG. 4A and FIG. 4B, FIG. 5A and FIG. 5B, FIG. 9, and FIG. 10.

An embodiment of this application provides a chip system. The chip system includes a processor, and may further include a memory, configured to implement a function of the first control plane network element in the foregoing methods, or configured to implement a function of the network function repository network element in the foregoing methods. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art can make various modifications and variations to embodiments of this application without departing from the scope of embodiments of this application. In this way, this application is intended to cover these modifications and variations to embodiments of this application provided that they fall within the scope of protection defined by the following claims and their equivalent technologies of this application.

## Claims

1. A communication method, comprising:
receiving, by a first control plane network element, call signaling related to a call service, wherein the call signaling comprises information about a first media plane network element, and the first media plane network element is configured to provide a first media plane service associated with the call service;
sending, by the first control plane network element, network element requirement information and preferred network element information to a network function repository network element based on the call signaling, wherein the network element requirement information indicates the network function repository network element to provide information about a media plane network element that can provide a second media plane service associated with the call service, and the preferred network element information indicates that the first media plane network element is a preferred media plane network element; and
receiving, by the first control plane network element, information about a target media plane network element from the network function repository network element, wherein the target media plane network element is configured to provide the second media plane service.

2. The method according to claim 1, wherein that the preferred network element information indicates that the first media plane network element is a preferred media plane network element comprises: the preferred network element information indicates to use the first media plane network element as the target media plane network element when the network function repository network element determines that the first media plane network element can provide the second media plane service.

3. The method according to claim 1 or 2, wherein the sending, by the first control plane network element, network element requirement information and preferred network element information to a network function repository network element comprises:
sending, by the first control plane network element, a service discovery request message to the network function repository network element, wherein the service discovery request message comprises the network element requirement information and the preferred network element information.

4. The method according to any one of claims 1 to 3, wherein the first media plane service is an access service or an interworking service, and the second media plane service is a resource service.

5. The method according to any one of claims 1 to 4, wherein the method further comprises:
obtaining, by the first control plane network element, target media endpoint information of the target media plane network element, wherein the target media endpoint information comprises information about a target media endpoint that is of the target media plane network element and that is configured to provide the second media plane service; and
sending, by the first control plane network element, the target media endpoint information to a second control plane network element, wherein the second control plane network element is a control plane network element that provides an access service or an interworking service for a calling terminal device or a called terminal device of the call service.

6. The method according to claim 5, wherein the target media endpoint information comprises an internet protocol IP address and a port number of the target media endpoint.

7. The method according to claim 5 or 6, wherein the target media plane network element is a second media plane network element, and the obtaining, by the first control plane network element, target media endpoint information of the target media plane network element comprises:
sending, by the first control plane network element, an endpoint allocation request to the target media plane network element, wherein the endpoint allocation request is for requesting the target media endpoint information; and
receiving, by the first control plane network element, an endpoint allocation response sent by the target media plane network element, wherein the endpoint allocation response comprises the target media endpoint information.

8. The method according to claim 5 or 6, wherein the target media plane network element is the first media plane network element, and the obtaining, by the first control plane network element, target media endpoint information of the target media plane network element comprises:
obtaining, by the first control plane network element, the target media endpoint information from the call signaling.

9. The method according to any one of claims 1 to 8, wherein the method further comprises:
requesting, by the first control plane network element, the target media plane network element to provide the second media plane service.

10. The method according to claim 9, wherein the requesting, by the first control plane network element, the target media plane network element to provide the second media plane service comprises:
sending, by the first control plane network element, indication information to the target media plane network element, wherein the indication information indicates the target media plane network element to provide the second media plane service through a target media endpoint.

11. The method according to any one of claims 1 to 10, wherein the first control plane network element is an application server that provides an application service for a local end, or a serving-call control network element.

12. The method according to any one of claims 5 to 10, wherein the second control plane network element is an interrogating-call session control network element or a proxy-call session control network element that provides an access service for a local end or a peer end.

13. A communication method, comprising:
receiving, by a network function repository network element, network element requirement information and preferred network element information that are sent by a first control plane network element, wherein the network element requirement information indicates the network function repository network element to provide information about a media plane network element that can provide a second media plane service associated with a call service, and the preferred network element information indicates that a first media plane network element is a preferred media plane network element;
determining, by the network function repository network element based on the network element requirement information and the preferred network element information, a target media plane network element that can provide the second media plane service associated with the call service, wherein the target media plane network element is configured to provide the second media plane service; and
sending, by the network function repository network element, information about the target media plane network element to the first control plane network element.

14. The method according to claim 13, wherein that the preferred network element information indicates that the first media plane network element is a preferred media plane network element comprises: the preferred network element information indicates to use the first media plane network element as the target media plane network element when the network function repository network element determines that the first media plane network element can provide the second media plane service.

15. The method according to claim 13 or 14, wherein the receiving, by a network function repository network element, network element requirement information and preferred network element information that are sent by a first control plane network element comprises:
receiving, by the network function repository network element, a service discovery request message sent by the first control plane network element, wherein the service discovery request message comprises the network element requirement information and the preferred network element information.

16. The method according to any one of claims 13 to 15, wherein the first media plane service is an access service or an interworking service, and the second media plane service is a resource service.

17. The method according to any one of claims 13 to 16, wherein before the sending, by the network function repository network element, information about the target media plane network element to the first control plane network element, the method further comprises:
determining, by the network function repository network element, whether the first media plane network element can provide the second media plane service; and
if the network function repository network element determines that the first media plane network element can provide the second media plane service, determining, by the network function repository network element, to use the first media plane network element as the target media plane network element; or
if the network function repository network element determines that the first media plane network element cannot provide the second media plane service, selecting, by the network function repository network element, a media plane network element that can support the second media plane service as the target media plane network element.

18. The method according to claim 17, wherein the determining, by the network function repository network element, whether the first media plane network element can provide the second media plane service comprises:
obtaining, by the network function repository network element, capability information of the first media plane network element, wherein the capability information indicates a service that can be provided by the first media plane network element; and
determining, by the network function repository function network element based on the capability information, whether the first media plane network element can provide the second media plane service.

19. A communication apparatus, comprising a processing module and a transceiver module, wherein
the transceiver module is configured to: receive call signaling related to a call service, send network element requirement information and preferred network element information to a network function repository network element based on the call signaling, and receive information about a target media plane network element from the network function repository network element, wherein the call signaling comprises information about a first media plane network element, and the first media plane network element is configured to provide a first media plane service associated with the call service, the network element requirement information indicates the network function repository network element to provide information about a media plane network element that can provide a second media plane service associated with the call service, the preferred network element information indicates that the first media plane network element is a preferred media plane network element, and the target media plane network element is configured to provide the second media plane service; and
the processing module is configured to determine the target media plane network element based on the network element requirement information and the preferred network element information.

20. The apparatus according to claim 19, wherein that the preferred network element information indicates that the first media plane network element is a preferred media plane network element comprises: the preferred network element information indicates to use the first media plane network element as the target media plane network element when the network function repository network element determines that the first media plane network element can provide the second media plane service.

21. The apparatus according to claim 19 or 20, wherein the transceiver module is specifically configured to:
send a service discovery request message to the network function repository network element, wherein the service discovery request message comprises the network element requirement information and the preferred network element information.

22. The apparatus according to any one of claims 19 to 21, wherein the first media plane service is an access service or an interworking service, and the second media plane service is a resource service.

23. The apparatus according to any one of claims 19 to 22, wherein the processing module is further configured to obtain target media endpoint information of the target media plane network element, wherein the target media endpoint information comprises information about a target media endpoint that is of the target media plane network element and that is configured to provide the second media plane service; and
the transceiver module is further configured to send the target media endpoint information to a second control plane network element, wherein the second control plane network element is a control plane network element that provides an access service or an interworking service for a calling terminal device or a called terminal device of the call service.

24. The apparatus according to claim 23, wherein the target media endpoint information comprises an internet protocol IP address and a port number of the target media endpoint.

25. The apparatus according to claim 23 or 24, wherein the target media plane network element is a second media plane network element, and the transceiver module is further configured to:
send an endpoint allocation request to the target media plane network element, wherein the endpoint allocation request is for requesting the target media endpoint information of the target media plane; and
receive an endpoint allocation response sent by the target media plane network element, wherein the endpoint allocation response comprises the target media endpoint information.

26. The apparatus according to claim 23 or 24, wherein the target media plane network element is the first media plane network element, and the processing module is configured to obtain the target media endpoint information from the call signaling.

27. The apparatus according to any one of claims 19 to 26, wherein the transceiver module is further configured to request the target media plane network element to provide the second media plane service.

28. The apparatus according to claim 27, wherein the transceiver module is specifically configured to:
send indication information to the target media plane network element, wherein the indication information indicates the target media plane network element to provide the second media plane service through the target media endpoint.

29. The apparatus according to any one of claims 19 to 28, wherein the communication apparatus is an application server that provides an application service for a local end, or a serving-call control network element.

30. The apparatus according to any one of claims 24 to 28, wherein the second control plane network element is an interrogating-call session control network element or a proxy-call session control network element that provides an access service for a local end or a peer end.

31. A communication apparatus, comprising a transceiver module and a processing module, wherein
the transceiver module is configured to receive network element requirement information and preferred network element information that are sent by a first control plane network element, wherein the network element requirement information indicates the communication apparatus to provide information about a media plane network element that can provide a second media plane service associated with a call service requested by a terminal device, and the preferred network element information indicates that a first media plane network element is a preferred media plane network element;
the processing module is configured to determine, based on the network element requirement information and the preferred network element information, a target media plane network element that can provide the second media plane service associated with the call service, wherein the target media plane network element is configured to provide the second media plane service; and
the transceiver module is further configured to send information about the target media plane network element to the first control plane network element.

32. The apparatus according to claim 31, wherein that the preferred network element information indicates that the first media plane network element is a preferred media plane network element comprises: the preferred network element information indicates to use the first media plane network element as the target media plane network element when the network function repository network element determines that the first media plane network element can provide the second media plane service.

33. The apparatus according to claim 31 or 32, wherein the transceiver module is specifically configured to receive a service discovery request message sent by the first control plane network element, wherein the service discovery request message comprises the network element requirement information and the preferred network element information.

34. The apparatus according to any one of claims 31 to 33, wherein the first media plane service is an access service or an interworking service, and the second media plane service is a resource service.

35. The apparatus according to any one of claims 31 to 34, wherein the processing module is further configured to:
determine whether the first media plane network element can provide the second media plane service; and
if it is determined that the first media plane network element can provide the second media plane service, determine to use the first media plane network element as the target media plane network element; or
if it is determined that the first media plane network element cannot provide the second media plane service, select a media plane network element that can support the second media plane service as the target media plane network element.

36. The apparatus according to claim 35, wherein the processing module is specifically configured to:
obtain capability information of the first media plane network element; and determine, based on the capability information, whether the first media plane network element can provide the second media plane service, wherein the capability information indicates a service that can be provided by the first media plane network element.

37. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 12, or enable the communication apparatus to perform the method according to any one of claims 13 to 18.

38. A communication system, comprising a control plane network element, a network function repository network element, and a terminal device, wherein the control plane network element is configured to implement the method according to any one of claims 1 to 12, and the network function repository network element is configured to implement the method according to any one of claims 13 to 18.

39. A computer-readable storage medium, wherein the computer-readable storage medium stores a computer program, and when the computer program is executed by a computer, the computer is enabled to perform the method according to any one of claims 1 to 12, or the computer is enabled to perform the method according to any one of claims 13 to 18.

40. A computer program product, wherein the computer program product stores a computer program, and when the computer program is executed by a computer, the computer is enabled to perform the method according to any one of claims 1 to 12, or the computer is enabled to perform the method according to any one of claims 13 to 18.
